# EUROPÄISCHE PATENTSCHRIFT

(11) **EP 2 713 110 B1**
(45) Veröffentlichungstag und Bekanntmachung des Hinweises auf die Patenterteilung: **16.03.2016**
(21) Anmeldenummer: 13185985.2
(22) Anmeldetag: 25.09.2013
(51) Int. Cl.: F28D 20/00

(54) **Wärmeenergieversorgungsanlage mit einem offenen Erdspeicher**
Thermal energy supply installation with an open ground storage device
Installation d'alimentation en énergie thermique comprenant un accumulateur terrestre ouvert

(30) Priorität: 26.09.2012 DE 102012019323
(43) Veröffentlichungstag der Anmeldung: 02.04.2014
(73) Patentinhaber: Deunert und Holthuizen GbR, 10829 Berlin (DE)
(72) Erfinder: Deunert, Dietmar, 16562 Bergfelde (DE); Holthuizen, Taco, 14532 Kleinmachnow (DE)
(74) Vertreter: Gulde & Partner

(56) Entgegenhaltungen:
- EP-A2- 2 151 637
- DE-A1-102007 019 748
- DE-A1-102007 044 557
- DE-U1-202006 011 482

## Beschreibung

Wir haben kein Energieproblem, wir haben ein Speicherungs- und Regelungsproblem! Um uns herum ist potentielle, thermische, kinetische Energie in Hülle und Fülle vorhanden, egal wo wir uns auf der Welt befinden. Im Regelfall geht die Sonne auf und frühestens nach 12 Stunden wieder unter, auch steht uns überall und immer frische Luft zur Verfügung. Wenn wir uns nicht gerade in Permafrostgebieten aufhalten, finden sich auch im Erdreich an der Geländeoberfläche Temperaturen über Null Grad.

Es geht insbesondere um die Themenfelder Energieerzeugung, Regelung und Speicherung.

Unsere Heiz- und Kühltechniken bauen überwiegend auf dem Prinzip der Verbrennung auf. Neue, regenerative Energien gewonnen auf dem Prinzip von Erdwärmepumpen saugen dahingehend die im Erdreich gespeicherte thermische Energie ab, ob die notwendigen Regenerierungsprozesse eingehalten werden und welche Erdreichdestabilisierung damit einher geht, muss in die Gesamtbetrachtung einbezogen werden.

Wie werden die Energieflüsse in der Praxis vom Heizkeller zum Nutzer gebracht? Im Regelfall aktivieren wir Energiegewinnungsprozesse, wenn ein Bedarf an Heiz- oder Kühlenergie festgestellt wird. Mir ist kalt, also heize ich, mir ist warm, als kühle ich, wir erleben unsere Umwelt statisch. Dynamische Betrachtungen sind eher Mangelware, wenn sich keine Personen mehr in einem Gebäude aufhalten, kommt es im Besten Fall zu einer Nachtabsenkung der Raumtemperaturen. Fortschrittliche Regelungstechniken, basierend auf dem Prinzip einer langsam reagierenden Grundlastbereitstellung und einer schnell reagierenden Spitzenlastbereitstellung, um z.B. auf Nutzerverhalten zu reagieren, fehlen insbesondere im Wohnungsbau fast vollständig.

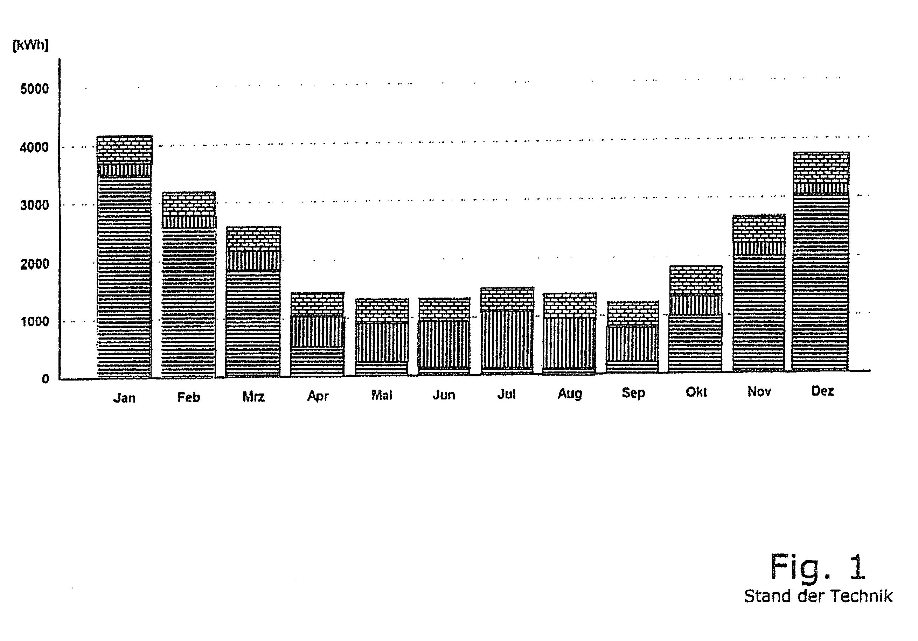

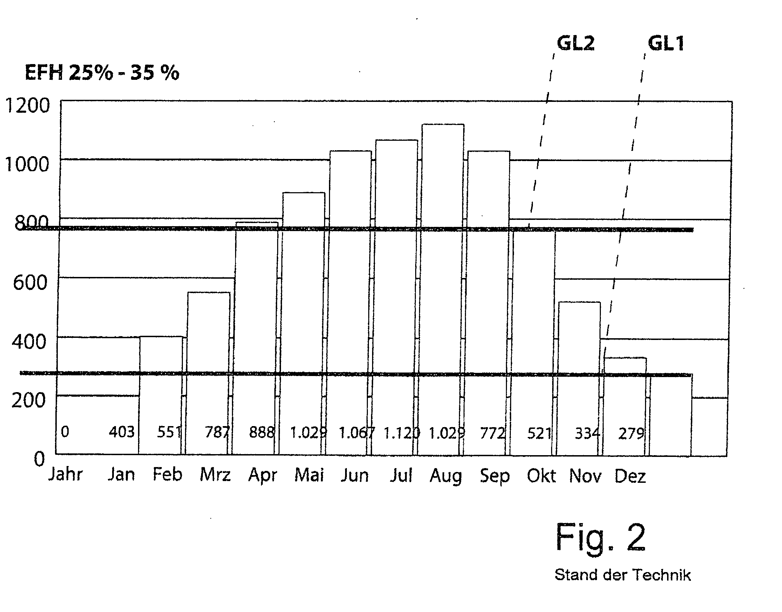

Es sollte auf die Einbindung regenerativer Energien nicht verzichtet werden. Um uns herum ist doch Energie in Hülle und Fülle vorhanden, für die nichts bezahlt werden muss! Sonnen- und Windenergie stehen uns aber leider nicht kalkulierbar zur Verfügung. Die Sonnenenergie im Sommer können wir kaum nutzen, im Winter steht sie uns allerdings weniger zur Verfügung. Die Wärme-Ertragsaussichten sind hinsichtlich unseres zeitlichen Bedarfes und hinsichtlich der gewünschten Quantität etwas chaotisch mal zu viel, mal zu wenig, mal zum falschen nicht bedarfsgerechten Zeitpunkt, wie die Figuren 1 und 2 verdeutlichen.

Figur 1 zeigt anhand von Balken den Bedarf eines Einfamilienhauses an Wärmeenergie für Heizung (horizontale Strichschraffur) und Warmwasser (Kreuzschraffur). Die vertikale Strichschraffur betrifft den Strombedarf eines Einfamilienhauses.

Im Sommer und Frühling ist der Bedarf an Wärmeenergie (April bis September) für die Heizung eher gering. Gerade dann stellt, wie Figur 2 zeigt, eine solarthermische Anlage des Einfamilienhauses besonders viel Wärmeenergie zur Verfügung, die jedoch nicht genutzt wird. Die Balken in Figur 2 zeigen den monatlichen durchschnittlichen möglichen nutzbaren Energieertrag an Wärmeenergie einer solarthermischen Anlage in einem Jahr.

Derzeit nutzt ein Einfamilienhaus nur 25% bis 35% der Wärmeenergie einer solarthermischen Anlage. Diese durchschnittlich genutzte Wärmeenergie zwischen 25% und 35% ergibt sich aus dem monatlich nutzbaren Bereich gemäß den Balken der Figur 2 und dem zeitgleich vorliegenden Bedarf gemäß Figur 1, zwischen der unteren Grenzlinie GL1 und der oberen Grenzlinie GL2 der Figur 2:

Aus Figur 2 wird deutlich, dass die im Sommer vorhanden Spitzen (oberhalb der oberen Grenzlinie GL2), der von einer solarthermischen Anlage erzeugten Wärmeenergie, insbesondere in den Monaten April bis August ungenutzt bleiben.

Ferner wird aus Figur 2 deutlich, dass eine solarthermische Anlage in den Monaten Januar und Februar sowie Oktober bis Dezember weniger Wärmeenergie zur Verfügung stellt, als von einem Heizungssystem (horizontale Strichschraffur) und/oder einem Warmwassersystem (Kreuzschraffur) genutzt werden könnte.

Ein Teil der Wärmeenergie liegt in allen Monaten des Jahres zudem in einem Temperaturbereich von circa <35°C vor. Dieser unterhalb der unteren Grenzlinie GL1 der Figur 2 liegende Temperaturbereich wird bisher nicht genutzt.

Ferner wird der oberhalb der oberen Grenzlinie GL2 genutzte Spitzen-Temperaturbereich, das heißt die Wärmeenergie, die insbesondere in den Monaten April bis September zur Verfügung steht ebenfalls nicht genutzt, da in dieser Zeit gemäß Figur 1 keine Abnehmer, wie z.B. Heizungssysteme (Strichschraffur) und/oder Warmwassersysteme (Kreuzschraffur) vorhanden sind, die diese Spitzen an Wärmeenergie oberhalb der oberen Grenzlinie GL2 der Figur 2 benötigen.

In der Vergangenheit wurde mit großen Wasserspeichern experimentiert, in denen sommerliche Solarüberschüsse für den Winter eingelagert werden, andere Forschungen beschäftigten sich mit thermochemischen Speichern, in denen durch reversible Hydrierungs- und Dehydrierungsprozesse thermische Energie eingelagert werden kann, daneben finden sich Forschungsbeiträge zu Latentwärmespeichern, Massenspeichern aus Beton und dergleichen, Erdspeichern und zuletzt auch zu Eisspeichern. Alle Lösungen bieten interessante Ansätze. Die Systeme haben einen gemeinsamen Nachteil, der darin besteht, dass die Kosten pro Kilowattstunde eingelagerter Energie vergleichsweise hoch sind.

Aus dem Stand der Technik ist ferner bekannt, dass die installierten Heiz- und Kühlsysteme eines Einfamilienhauses oder eines Wohnungskomplexes aus mehreren Wohnungen nach Bedarf gesteuert und geregelt werden. Energieanforderungen entstehen mit sich verändernden Nutzerverhalten, Transmissionswärmeverluste verändern sich im Tages-, Monats- und Jahresablauf, je nach Sonneneinstrahlung und Temperaturverlauf, Solarerträge unterliegen Schwankungen. Die Speicherung der Wärmeenergie erfolgt aber bisher in relativ statischen Schichtenspeichern und Verbrennungsprozesse liefern hohe Temperaturen, die abgekühlt zu Heizzwecken genutzt und deswegen zwischengepuffert werden müssen, und zu allem Überfluss müssen noch Lüftungsprozesse beachtet werden, da unsere Gebäude energetisch dicht gebaut werden.

Im Wohnungsbau sind fast alle Heizsysteme nach folgendem Prinzip aufgebaut: Ein Außenwandtemperaturfühler bestimmt die Wärmeanforderung des Gebäudes. Auf dieser Information aufbauend wird ein Heizprozess in Gang gesetzt, nach dem eine Verbrennung (Gas, Öl, Kohle, Pellet etc.) oder aber eine Luft- oder Erdwärmepumpe die benötigte Heizenergie aufbereitet. Wenn eine Solaranlage mit Schichtenspeicher eingebunden ist, liefert sie zusätzliche Energie zur Warmwasseraufbereitung und im besten Fall zur Heizungsunterstützung. Obwohl pro Quadratmeter Kollektorfläche um 1.040 Kilowattstunden Sonnenenergie im Jahr genutzt werden könnten, können tatsächlich in fast allen Fällen nur weit unter 300 Kilowattstunden zur Gebäudetemperierung genutzt werden.

Langfristige Speichertechnik ist noch sehr teuer. Die Einbindung von Sonnenenergie in das Heizungssystem, kann durch einen zugehörigen Schichtenspeicher teilweise nicht mehr aufgefangen werden. Wärmeenergie aus dem Solarkollektor im Temperaturbereich unter 35°C kann bei den bestehenden Anlagen nicht genutzt werden, weil das unterste Temperaturniveau im Schichtenspeicher im Regelfall erst ab 35°C beginnt.

Zusammengefasst bedeutet dies, gemäß der Beschreibung zu den Figuren 1 und 2, dass alle hohen Temperaturerträge im Sommer sowie alle Temperaturerträge unter 35°C ganzjährig nicht genutzt werden können. Sonnenenergie steht unregelmäßig zur Verfügung und wird im Regelfall in Schichtenspeichern zwischengelagert. Dieses System ist geschlossen, d.h. das Wasservolumen des Schichtenspeichers definiert in negativer Weise die maximal pufferbare Energie.

Eine weitere, wichtige Energiequelle wird heute noch stark unterschätzt. Der Frischluftaustausch im Gebäude muss im Regelfall über ein kontrolliertes Lüftungssystem gesichert werden. 25% bis 50 % des Wärmeenergiebedarfs zur Gebäudetemperierung könnten in unseren Breitengraden konstant, d.h. 365 Tage im Jahr, alleine aus der Wärmeenergie gewonnen werden, die in der Abluft gespeichert ist. Die Lüftungssysteme arbeiten im Normalfall jedoch unabhängig von den vorhandenen Heizungssystemen.

Ausgangspunkt für die Erfindung ist, eine Wärmeenergieversorgungsanlage, welche Wärmeenergie für mindestens ein Wärmeenergieverbrauchssystem aus mindestens einem Wärmeenergie-Einspeisesystem bereitstellt.

Solche den Ausgangspunkt der Erfindung bildenden Wärmenergieversorgungsanlagen sind aus den Druckschriften DE 20 2006 011 482 U1 und DE 10 2007 044 557 A1 sowie der Druckschrift EP 2 151 637 A2 und der Druckschrift DE 10 2007 019 748 A1 bekannt.

Insbesondere die Druckschrift EP 2 151 637 A2 offenbart eine Wärmenergieversorgungsanlage zur Bereitstellung warmen Brauchwassers, welche einen Solarkreislauf aufweist, in dem ein erstes Fluid gefördert wird. Die Wärmenergieversorgungsanlage weist zudem zur Bereitstellung warmen Brauchwassers einen Solekreislauf auf, in dem ein zweites Fluid gefördert wird. Es ist ferner ein Wärmeübertrager vorgesehen, durch den sowohl der Solarkreislauf als auch der Solekreislauf verläuft. Der Wärmeübertrager ist so aufgebaut und angeordnet, dass in ihm Wärme aus dem ersten Fluid im Solarkreislauf auf das zweite Fluid im Solekreislauf übertragen wird. Die Wärmenergieversorgungsanlage offenbart keine Möglichkeit zur Langzeitspeicherung von Wärme in einem Erdspeicher.

Erdspeicher sind aus den Druckschriften DE 20 2006 011 482 U1 und DE 10 2007 044 557 A1 sowie DE 10 2007 019748 A1 bekannt. Sie haben jedoch den Nachteil, dass es bei ihnen zu einer ungleichmäßigen Verteilung der Wärme im Erdspeicher kommt.

Als nächstliegender Stand der Technik wird die Druckschrift DE 20 2006 011 482 U1 betrachtet. Die Druckschrift offenbart ein solarenergieversorgtes Heiz- und Warmwassersystem für ein Gebäude, welches mindestens eine thermische Solaranlage mit einem hydraulischem Kreislaufsystem und darin eingebundenen Solarkollektoren und/oder Energiematten und ein Wärmepumpensystem mit einem hydraulischen Kreislaufsystem umfasst, die in mindestens einen Energiespeicher eingebunden sind, aus dem mindestens ein Verbraucher mit Wärmeenergie versorgbar ist sowie mindestens einem energieauf- und entladbaren Feststoff-Erdspeicher, der in das hydraulische Kreislaufsystem des Wärmepumpensystems eingebunden ist und dem von mindestens einer Quelle Wärmeenergie zur Speisung des Wärmepumpensystems zuführbar ist. Das System umfasst den Feststoff-Erdspeicher, der mindestens eine obere Begrenzung und/oder eine seitliche Begrenzungen unter Ausbildung einer wärmeenergiestauenden Grenzschicht oder wärmeenergiestauenden Wärmeschürze umfasst, dem Wärmeenergie zuführbar ist, und zeitweise speicherbar beziehungsweise staubar ist, indem im Feststoff-Erdspeicher ein, von einem Vorlauf der thermischen Solaranlage abgehendes Verteilersystem angeordnet ist, welches in einem Rücklauf der thermischen Solaranlage mündet.

Die Aufgabe der Erfindung besteht darin, zur Verfügung stehende Wärmeenergie mindestens eines Wärmeenergie-Einspeisesystems einer einen Erdspeicher umfassenden Wärmeenergieversorgungsanlage optimal und bedarfsgerecht verfügbar zu machen.

Es wird vorangestellt, dass es sich, wenn nachfolgend von einer solarthermischen Anlage berichtet wird, um eine sogenannte Anlage handelt, die entweder ausschließlich zur heizungsseitigen Wärmeerzeugung oder auch zur Warmwassererzeugung genutzt wird oder die eine Kombi-Anlage oder Hybridanlage ist, die sowohl für Photovoltaik als auch für die Solarthermie genutzt wird. Bei Hybridanlagen wird der Photovoltaikanteil zur Erzeugung von Solarstrom und der Solarthermieanteil zur Erzeugung von Wärme für Heizung beziehungsweise Heizungsunterstützung und/oder zur Warmwassererzeugung beziehungsweise zur Unterstützung der Warmwassererzeugung genutzt.

Die erfindungsgemäße Wärmenergieversorgungsanlage umfasst ein Wärmeenergie-Einspeisesystem mit einer solarthermische Anlage und/oder einem Abluft-Wärmepumpensystem sowie einem Wärmepumpensystem und Wärmeenergieverbrauchern wie beispielsweise einem Heizungssystem und/oder einem Warmwasserversorgungssystem und einem an das Wärmepumpensystem angekoppelten Erdspeicher.

Als Wärmeenergie-Einspeisesystem ist mindestens eine solarthermische Anlage zur Gewinnung von in einem Fluid eines Kollektorkreislaufes gespeicherter Solarwärme und/oder mindestens ein Abluft-Wärmepumpensystem zur Gewinnung von in einem gasförmigen Fluid des Kreislaufes, insbesondere Luftkreislaufes gespeicherter Wärme sowie mindestens ein Wärmepumpensystem zur Gewinnung von in einem Fluid eines primären Wärmepumpenkreislaufes eines Wärmepumpensystems gespeicherter Erdwärme vorgesehen.

Es ist vorgesehen, dass der Kollektorkreislauf der solarthermischen Anlage und/oder der Kreislauf des Abluft-Wärmepumpensystems mit dem primären Wärmepumpenkreislauf des Wärmepumpensystems über je einen Wärmetauscher verfügt, der oder die mit einer Wärmeenergie aufnehmenden und abgebenden im Erdreich angeordneten Einrichtung in Verbindung steht/stehen.

Ferner ist vorgesehen, dass die gewonnene Wärmeenergie aus der solarthermischen Anlage und/oder dem Abluft-Wärmepumpensystem über den oder die Wärmetauscher im primären Wärmepumpenkreislauf des Wärmepumpensystems entweder einem der an das Wärmepumpensystem sekundärseitig angeschlossenen Wärmeenergieverbrauchssysteme zugeführt oder in der Einrichtung gespeichert und im Bedarfsfall über den primären Wärmepumpenkreislauf des Wärmepumpensystems wieder entnommen wird.

Die Einrichtung ist bezüglich einer Geländeoberkante des Erdreichs ein mit einer oberen und einer seitlich umlaufenden Dämmungs- und Abdichtungsstruktur versehener nach unten offener Erdspeicher.

Der Erdspeicher ist als Teil des primären Wärmepumpenkreislaufes des Wärmepumpensystems aus mehreren an einer Verteilerblock-Vorlaufseite beginnenden und einer Verteilerblock-Rücklaufseite endenden Rohrleitungen ausgebildet, die in mehreren übereinander liegenden horizontalen Ebenen mehrere Rohrleitungslagen bilden, die unterhalb der innerhalb der Dämmungs- und Abdichtungsstruktur angeordneten Verfülllage aus Erdreich liegen.

Ferner sind die mehreren Rohrleitungen über die mehreren Ebenen geführt, und die mehreren Rohrleitungen bilden gemeinsam in jeder der Ebenen die Rohrleitungslage. Erfindungsgemäß ist vorgesehen, dass die mehreren innerhalb der Ebenen nebeneinander liegenden Rohrleitungen, die Fließrichtung des im primären Wärmepumpenkreislauf des Wärmepumpensystems angeordneten Fluids betreffend, zu einer Vereinheitlichung des Temperaturniveaus im Erdspeicher in einer dreidimensionalen Verlegegeometrie im Gegenstromprinzip angeordnet sind. Außerdem wird erfindungsgemäß dafür gesorgt, dass die mehreren nebeneinander liegenden Rohrleitungen innerhalb der Ebenen derart angeordnet sind, dass eine Vorlaufseite einer Rohrleitung abwechselnd neben einer Rücklaufseite einer nächstliegenden anderen Rohrleitung usw. angeordnet ist.

Dabei ist die mindestens eine Rohrleitung ein Teil des primären Wärmepumpenkreislaufes des Wärmepumpensystems, so dass Wärmeenergie aus der solarthermischen Anlage und/oder dem Abluft-Wärmepumpensystem über den oder die Wärmetauscher im primären Wärmepumpenkreislauf des Wärmepumpensystems entweder kurzfristig einem der an das Wärmepumpensystem sekundärseitig angeschlossenen Wärmeenergieverbrauchssysteme zuführbar oder langfristig in dem Erdspeicher speicherbar und im Bedarfsfall über den primären Wärmepumpenkreislauf des Wärmepumpensystems wieder entnehmbar ist.

In bevorzugter Ausgestaltung der Erfindung ist vorgesehen, dass der jeweilige Wärmetauscher, in Fließrichtung des jeweiligen Fluids im primären Wärmepumpenkreislauf des Wärmepumpensystems gesehen, im Rücklauf des primären Wärmepumpenkreislaufs vor dem Erdspeicher oder im Vorlauf des primären Wärmepumpenkreislauf hinter dem Erdspeicher angeordnet ist.

Ferner ist bevorzugt vorgesehen, dass der Kollektorkreislauf der solarthermischen Anlage und/oder der Kreislauf des Abluft-Wärmepumpensystems jeweils eine Umschaltarmatur umfasst, die das jeweilige Fluid über einen ersten Abzweig in dem jeweiligen Kreislauf führt oder die das jeweilige Fluid im Kollektorkreislauf und/oder im Kreislauf zur Temperaturanhebung des in dem primären Wärmepumpenkreislauf des Wärmepumpensystems angeordnet Fluids (Soleanhebung) nutzt, und über einen zweiten Abzweig dem jeweiligen Wärmetauscher im primären Wärmepumpenkreislauf des Erdspeichers zuführt.

Die Wärmeenergieversorgungsanlage umfasst in vorteilhafter Weise ein einziges Steuer- und Regelgerät, das mit allen vorhandenen Wärmeenergieverbrauchssystemen und allen vorhandenen Wärmeenergie-Einspeisesystemen in Verbindung steht.

Durch eine solche Wärmeenergieversorgungsanlage ist ein Verfahren durchführbar, welches im Anspruch 5 gelehrt wird.

Das Verfahren zeichnet sich dadurch aus, dass innerhalb der Wärmenergieversorgungsanlage zur Bereitstellung von Wärme für mindestens ein Wärmeenergieverbrauchssystem der Wärmeenergieversorgungsanlage mindestens ein Wärmeenergie- Einspeisesystems angeordnet ist, wobei die Wärmeenergie aus in einem Fluid gespeicherter Solarwärme eines Kollektorkreislaufes mindestens einer solarthermischen Anlage und/oder aus in einem gasförmigen Fluid gespeicherter Wärme eines Kreislaufes, insbesondere Luftkreislaufes mindestens eines Abluft-Wärmepumpensystems und aus in einem Fluid gespeicherter Erdwärme eines primären Wärmepumpenkreislaufes mindestens eines Wärmepumpensystems gewonnen wird. Dabei ist/sind der Kollektorkreislauf der solarthermischen Anlage und/oder der Luftkreislauf des Abluft-Wärmepumpensystems mit dem primären Wärmepumpenkreislauf des Wärmepumpensystems über jeweils einen Wärmetauscher mit einer Wärmeenergie aufnehmenden und abgebenden im Erdreich angeordneten Einrichtung thermodynamisch verbunden. Dabei wird die gewonnene Wärmeenergie aus der solarthermischen Anlage und/oder dem Abluft-Wärmepumpensystem über den oder die Wärmetauscher im primären Wärmepumpenkreislauf des Wärmepumpensystems entweder einem der an das Wärmepumpensystem sekundärseitig angeschlossenen Wärmeenergieverbrauchssysteme zugeführt oder in der Einrichtung gespeichert und im Bedarfsfall über den primären Wärmepumpenkreislauf des Wärmepumpensystems wieder entnommen.

Es ist vorgesehen, dass die Einrichtung bezüglich einer Geländeoberkante des Erdreichs ein mit einer oberen und einer seitlich umlaufenden Dämmungs- und Abdichtungsstruktur versehener nach unten offener Erdspeicher ist, der als Teil des primären Wärmepumpenkreislaufes des Wärmepumpensystems aus mehreren an einem Verteilerblock-Vorlaufseite beginnenden und einem Verteilerblock-Rücklaufseite endenden Rohrleitungen ausgebildet wird, wobei in mehreren übereinander liegenden horizontalen Ebenen mehrere Rohrleitungslagen gebildet werden, die unterhalb der der Dämmungs- und Abdichtungsstruktur angeordneten Verfülllage aus Erdreich liegen, wobei die mehreren Rohrleitungen über die mehreren Ebenen geführt werden, und aus den mehreren Rohrleitungen gemeinsam in jeder der Ebenen die Rohrleitungslage gebildet wird.

Erfindungsgemäß ist vorgesehen, dass die mehreren innerhalb der Ebenen nebeneinander liegenden Rohrleitungen, die Fließrichtung des im primären Wärmepumpenkreislauf des Wärmepumpensystems angeordneten Fluids betreffend, zur Vereinheitlichung des Temperaturniveaus im Erdspeicher in einer dreidimensionalen Verlegegeometrie im Gegenstromprinzip angeordnet werden, und die mehreren nebeneinander liegenden Rohrleitungen innerhalb der Ebenen derart angeordnet werden, dass ein Vorlauf einer Rohrleitung abwechselnd neben einem Rücklauf einer nächstliegenden anderen Rohrleitung usw. angeordnet ist.

Das Verfahren zeichnet sich erfindungsgemäß ferner dadurch aus, dass der Kollektorkreislauf der solarthermischen Anlage und/oder der Kreislauf des Abluft-Wärmepumpensystems jeweils eine Umschaltarmatur umfasst, die das jeweilige Fluid über einen ersten Abzweig in dem jeweiligen Kreislauf führt, oder die das jeweilige Fluid über einen zweiten Abzweig dem jeweiligen Wärmetauscher im primären Wärmepumpenkreislauf des Erdspeichers des Wärmepumpensystems zuführt, wodurch eine Temperaturanhebung (Soleanhebung) des in dem primären Wärmepumpenkreislauf des Wärmepumpensystems angeordneten Fluids vorgenommen wird.

Ferner zeichnet sich das Verfahren dadurch aus, dass sich die Temperatur des Fluids innerhalb des Kollektorkreislaufes der mindestens einen solarthermischen Anlage und/oder des Kreislaufes des mindestens eines Abluft-Wärmepumpensystems in bestimmten Zeitabständen oszillierend ändert, weshalb die Temperaturanhebung (Soleanhebung), des in dem primären Wärmepumpenkreislauf des Wärmepumpensystems angeordneten Fluids oszillativ vorgenommen wird.

Es ist zudem in vorteilhafter Weise in beiden Ausführungsformen vorgesehen, dass die Wärmeenergieflüsse aller vorhandenen Wärmeenergieverbrauchssysteme und aller vorhandenen Wärmeenergie-Einspeisesysteme der Wärmeenergieversorgungsanlage mittels eines einzigen Steuer- und Regelgerätes gesteuert und regelt werden.

Durch die einige den Aufbau der Wärmenergieversorgungsanlage und das Verfahren betreffenden wichtigen technischen Merkmale wird der Erdspeicher auch als offener, "oszillierender" Puffer-Speicher (ooPS) bezeichnet.

Hierbei handelt es sich bei einem Neubau eines Gebäudes um das Erdreich unter dem zukünftigen Gebäude, oder bei einer Sanierung eines Gebäudes um Erdreich neben dem Gebäude, dass bis zu einer Tiefe von ca. 1,5 m in einer Art Erdspeicher, dem sogenannten eTank, umgewandelt wird.

Sonnenenergie, die nicht zur Gebäudetemperierung genutzt werden kann, d.h. sämtliche Überschüsse - auch die Spitzen oberhalb der oberen Grenzlinie GL2 der Figur 2 - und der bisher nicht genutzte, ganzjährige Temperaturbereich unter 35°C unterhalb der unteren Grenzlinie GL1 der Figur 2, werden über die Solarkollektoranlage ins Erdreich in den Erdspeicher geleitet.

Das ungünstige zeitliche und quantitative Anfallen von Wärmeenergie in verschiedenen Systemen zur Wärmeenergiegewinnung kann so erfindungsgemäß zur Erhöhung der Ertragsaussichten einer Wärmeenergieversorgungsanlage doch genutzt werden, indem eine Wärmeenergieeinlagerung mit vereinheitlichtem Temperaturniveau im Erdreich erfolgt. Je nach Anfall der Wärme beziehungsweise nach bestimmten Prinzipien wird Wärme über ein Leitungssystem, insbesondere aus beständigen PE-Xa-Rohren ähnlich einer Fußbodenheizung, das in Wasserschutzgebieten sogar mit destilliertem Wasser gefüllt werden kann, im Erdreich eingelagert.

Die Sonnenenergie aus der solarthermischen Anlage wird in einer bevorzugten Ausgestaltung der Erfindung, dabei nach dem Prinzip Energienutzung vor Speicherung über ein einziges Steuer- und Regelgerät, welches als dynamischer Energiemanager bezeichnet wird, direkt einer Erdwärmesonde eines Wärmepumpensystems zugeführt oder an Erdregister eines Wärmepumpensystems übergeben, wobei über die Erdwärmesonde oder Erdregister schließlich das Erdreich des Erdspeichers erwärmt wird. Der enorme Vorteil besteht darin, dass der Erdspeicher mit der Bezeichnung - eTank - alle vorhandenen solaren Erträge aufnehmen kann und ein offenes, fast unbegrenzt befüllbares Pufferspeichersystem darstellt, der unendlich oft be- und entladen werden kann.

Im Gegensatz zu Batterien nimmt die Speicherfähigkeit des als "eTank" bezeichneten Erdspeichers dabei nicht ab. Es wurde durch aufwändige Versuche gefunden, dass die Be- und Entladung bei einer bestimmten erfindungsgemäßen Fahrweise der Wärmeenergieversorgungsanlage ein oszillierendes Verhalten annimmt, wobei das Verhalten mehrmals am Tag beobachtbar stattfindet.

Oft reichen sogar solare Erträge im Winter aus, um ein Wärmepumpensystem mit Wärmeenergie beliefern zu können, wobei die Wärmeenergie über das Wärmepumpensystem direkt verbraucht wird oder sogar gleichzeitig eine "Befüllung" des Erdspeichers mit Wärmeenergie ermöglicht wird. Es wurde durch Messungen herausgefunden und bestätigt, dass selbst in sehr kalten Wintern das Temperaturniveau im Erdspeicher nicht unter 6°C fällt, das heißt der erfindungsgemäße Erdspeicher ist dauerhaft frostsicher.

Der Energieeintrag beziehungsweise die Energieentnahme im eTank unterliegt dabei den Schwankungen der Sonne beziehungsweise dem Nutzerverhalten und findet in unterschiedlichen Intervallen statt, teilweise gleichzeitig oder aber zeitversetzt.

Das Erdreich bildet eine Art Zwischenspeichermasse für Energie, die unendlich erweitert werden kann, solange alles nach den Prinzipien eines offenen Erdspeicher erfolgt, wie nachfolgend noch erläutert wird.

Das Temperaturniveau im eTank im Jahr schwankt zwischen 6°C und max. 23°C. Damit wird im eTank ein relativ hohes Temperaturniveau erreicht. Die Temperatur ist dabei jedoch nicht so hoch, dass eine Erdreich- beziehungsweise Grundwasserdestabilisierung durch hohe Energieeinträge erfolgt. Solche Effekte sind bei der Verwendung des erfindungsgemäßen Erdspeichers daher ausgeschlossen.

Über das Rohrleitungssystem zur Be- und Entladung des eTanks mit thermischer Energie wird mit Hilfe eines Wärmepumpensystems die über das Jahr gespeicherte Energie bedarfsabhängig zu den Wärmeenergieverbrauchssystemen zurückgeholt.

Die Systemjahresarbeitszahl (SJAZ) des nachfolgend beschriebenen Wärmepumpensystems steigt durch das Temperaturniveau im eTank sowie einer solaren Soleanhebung auf über 7,3.

Erfindungswesentlich ist auch die wirtschaftliche Gesamtbetrachtung des Anlagensystems.

Mit einer kontrollierten Be- und Entlüftung einer solarthermischen Anlage mit Pufferspeicher, einem Wärmepumpensystem mit integriertem dynamischen Energiemanager sowie dem Erdspeicher (eTank) wird ein höchst effizientes System hergestellt, das komplett ohne Tiefenbohrung, Flächengründung oder sonstiger Energiezufuhr zuverlässig kalkulierbar Energie zur Gebäudetemperierung und/oder als Warmwasser, und zwar ganzjährig, in extrem kalten Wintern und in heißen Sommern zur Verfügung stellt.

Das System kann mit der gleichen Anlagenkonfiguration auch im Sommer Kühllasten effektiv zur Verfügung stellen. Dem eTank werden über das Jahr betrachtet nicht nur Energien eingelagert, sondern auch entzogen. Durch die Entnahme der Energie wird ein Temperatumiveau im Erdreich erreicht, das intelligent gesteuert im Sommer als Kühllast zur Verfügung stehen kann.

Bei der wirtschaftlichen Gesamtbetrachtung des Anlagensystems spielen folgende Parameter eine Rolle:
Die Kosten der Anlagenbestandteile, die Regelungs- und Speicherlogik, die Anlageneffizienz sowie der Platzbedarf der Technik. Hauptaugenmerk darf auf keinen Fall nur auf eine Jahresarbeitszahl oder einem COP-Wert gerichtet werden, sondern muss bei der Effizienz der Gesamtanlage, ausgedrückt durch die Primärenergie-Anlagenaufwandzahl ep liegen.

Diese Primärenergie-Anlagenaufwandzahl ep-Zahl bestimmt mehr oder weniger linear den tatsächlichen Primärenergiebedarf zur Gebäudetemperierung und damit auch die Endenergiekosten pro Jahr. Bewertet man die Kosten eines Anlagensystems auf Basis eines Energieträgers (z.B. Gas) bedeutet eine Primärenergie-Anlagenaufwandszahl ep-Zahl von 1,1 ca. 110 % Kosten, eine Primärenergie-Anlagenaufwandszahl ep-Zahl von 0,8 ca. 80% Energiekosten.

Als beste Anlagenkonfiguration auf Basis eines Wärmepumpensystems wurde bisher eine Primärenergie-Anlagenaufwandszahl ep-Zahl von ca. 0,6 erreicht.

Das gemäß dieser Erfindung beschriebene und in den Figuren dargestellte Anlagensystem mit oszillierenden offenen Pufferspeicher-Technik "ooPS-Technik" weist eine Primärenergie-Anlagenaufwandszahl ep-Zahl unter 0,3 auf, was ca. 30% der Energiekosten bedeutet, das heißt es findet eine Halbierung der bisher erreichten Primärenergie-Anlagenaufwandszahl ep-Zahl von ca. 0,6 statt.

Bei einem solchen Wert kann der notwendige Antriebsstrom für das Wärmepumpensystem durch eine kleine PV- oder Hybridanlage komplett selber erzeugt werden.

Der Regelungs- und Speicherlogik kommt erfindungsgemäß ein besonderer Stellenwert zu.

Zudem bedeutet Energieoptimierung auch Optimierung von Gebäudehülle und Haustechnik. Die Energiefrage darf auf keinen Fall von der Ressourcenthematik entkoppelt werden. Ein hoher ep-Wert hat einen wunderbaren Effekt: Notwendige Dämmstärken können erheblich reduziert werden. Wenn dann noch Holzdämmstoffe vermehrt zum Einsatz kommen, kann der CO₂-Austoss tatsächlich reduziert werden.

Der Ausgangspunkt der Erfindung wird anhand der Figuren 1 und 2 erläutert.

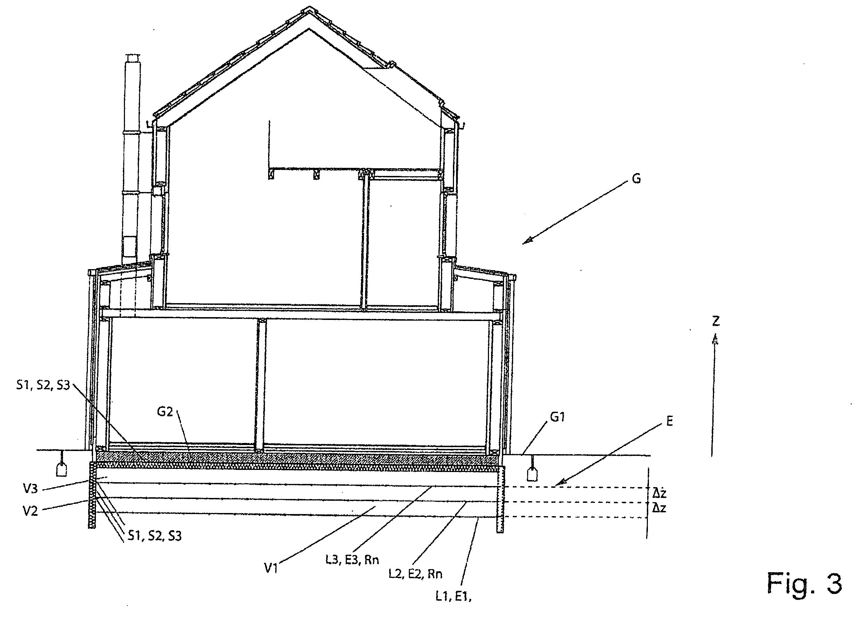

Der erfindungsgemäße Erdspeicher ist in den Figuren 3 bis 6 dargestellt.

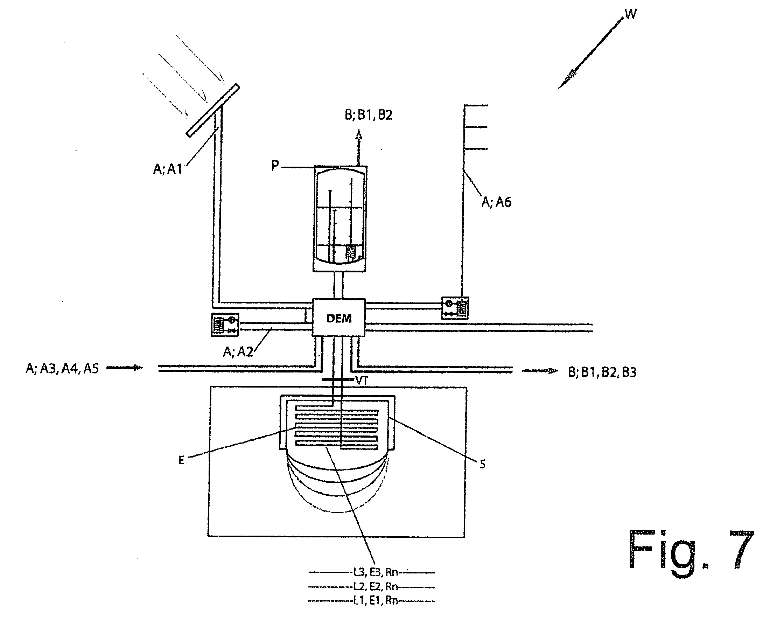

Das Wärmeenergieverbrauchssystem als schematisches Übersichtsbild ist in Figur 7 gezeigt.

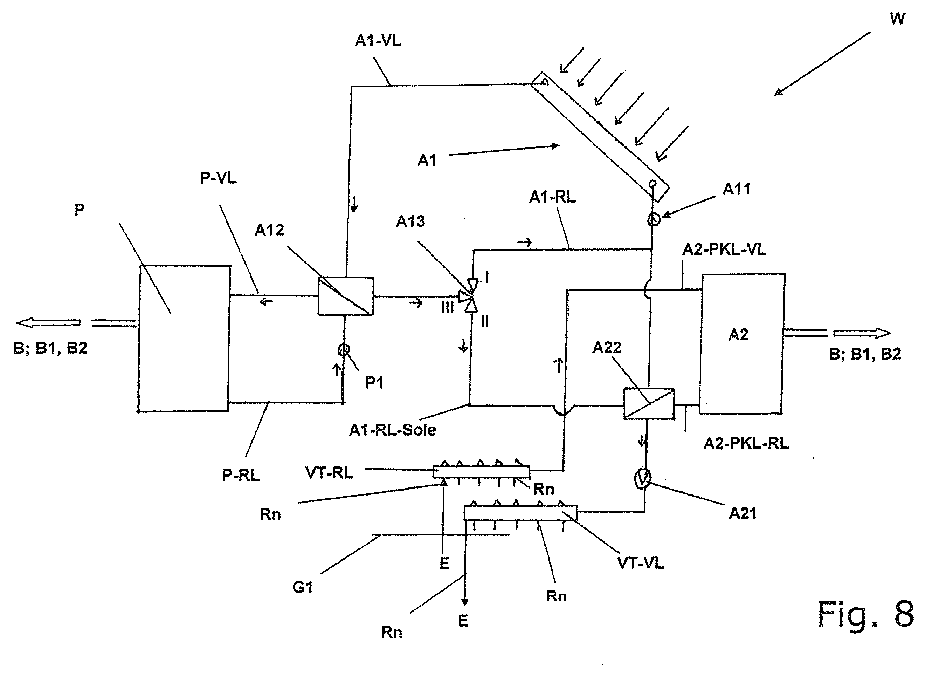

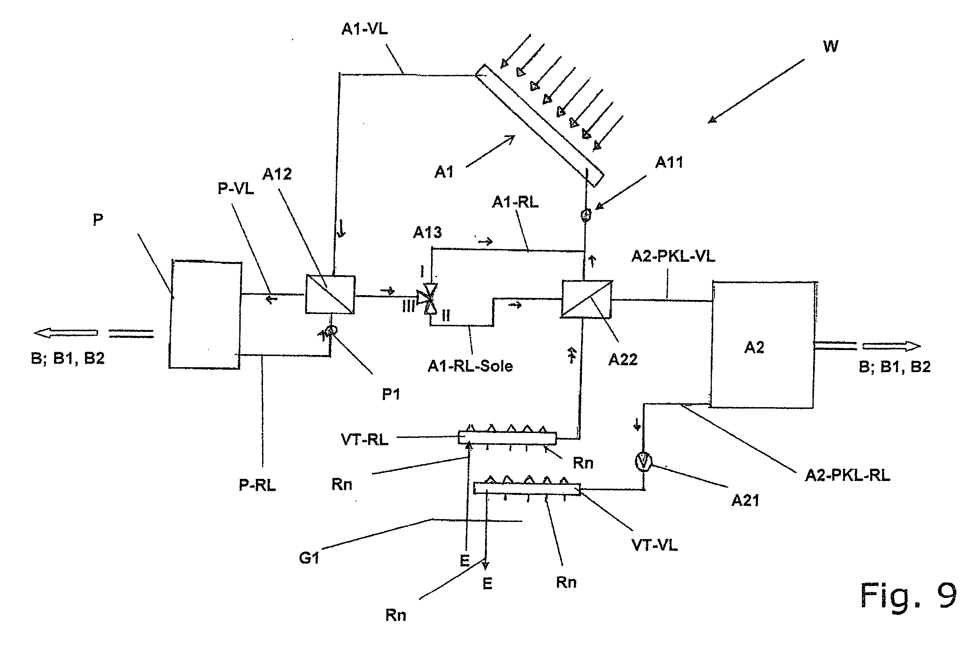

Die Figuren 8 und 9 zeigen die erste Ausführungsform in zwei Ausführungsvarianten.

Die Erfindung ergänzende Kennlinien sind in den Figuren 10 bis 12 dargestellt.

Es zeigen:
- Figur 1: ein Diagramm eines beispielhaften monatlichen Bedarfs an Wärmeenergie für Heizung und Warmwasser in einem Einfamilienhaus;
- Figur 2: ein Diagramm eines beispielhaften zur Verfügung stehenden monatlichen solaren Wärmeenergieertrages in einem mit Figur 1 vergleichbaren Einfamilienhaus;
- Figur 3: einen Vertikalschnitt durch ein Gebäude mit einem beispielhaft unter dem Gebäude angeordneten Erdspeicher;
- Figur 4: eine beispielhafte Verlegegeometrie der Rohrleitungen in einer Rohrleitungslage in einer Ebene des Erdspeichers nach Figur 3;
- Figur 5: ein Schnitt durch den Erdspeicher zur beispielhaften Darstellung der Temperaturen im Erdspeicher und der Funktion der Einlagerung von Wärmeenergie im Erdspeicher im Herbst (sogenannter Herbstfall) eines Jahres;
- Figur 6: ein Schnitt durch den Erdspeicher zur beispielhaften Darstellung der Temperaturen im Erdspeicher und der Funktion der Aufnahme von Wärmeenergie im Erdspeicher im Winter (sogenannter Winterfall) eines Jahres;
- Figur 7: eine schematische Darstellung einer variabel ausbildbaren Wärmeenergieversorgungsanlage mit dem erfindungsgemäßen Erdspeicher;
- Figur 8: eine schematische Darstellung einer Wärmeenergieversorgungsanlage mit einer solarthermischen Anlage und einer Wärmepumpenanlage sowie der Erdspeicher zur Verdeutlichung der Funktionsweise einer Soleanhebung über einen Rücklauf des Primärkreislaufes des Wärmepumpensystems und der Speicherung von Wärme in dem Erdspeicher; (erste Ausführungsform)
- Figur 9: eine schematische Darstellung der Wärmeenergieversorgungsanlage mit der solarthermischen Anlage und der Wärmepumpenanlage sowie dem Erdspeicher zur Verdeutlichung der Funktionsweise der Soleanhebung über einen Vorlauf des Primärkreislaufes des Wärmepumpensystems und der Speicherung von Wärme in dem Erdspeicher; (erste Ausführungsform)
- Figur 10: ein erstes Temperatur/Zeit-Diagramm mit Soleanhebung im Tagesverlauf;
- Figur 11: ein zweites Temperatur/Zeit-Diagramm mit Erdspeichertemperatur an mehreren aufeinanderfolgenden Tagen und
- Figur 12: ein drittes Temperatur/Zeit-Diagramm mit Soleanhebung und Erdspeichertemperatur und vergleichsweise Sondentemperatur einer Tiefenbohrung im Jahresverlauf;

Die Erfindung wird nachfolgend anhand der Figuren näher erläutert:

### Der Erdspeicher:

Zur Speicherung von Wärmeenergie umfasst die Wärmeenergieversorgungsanlage einen Erdspeicher E, dessen Aufbau und Wirkungsweise nachfolgend näher erläutert wird.

Gemäß Figur 3 wird zur Ausbildung des Erdspeichers E das in der Nähe des Gebäudes G vorhandene Erdreich genutzt. Das vorhandene Erdreich dient als Speichermasse für thermische Energie (nachfolgend Wärmeenergie).

Figur 3 verdeutlicht in der Schnittdarstellung des Gebäudes G und des Erdspeichers E, dass der Erdspeicher E beispielsweise unter einer Bodenplatte G2 eines Gebäude G errichtet wird. Es ist auch eine Anordnung des Erdspeichers E neben dem Gebäude G denkbar. Es bietet sich zum Beispiel ebenfalls eine Anordnung unter einer Garage oder allgemein einem neben dem Hauptgebäude stehenden zweiten Gebäude an.

Das Volumen beziehungsweise die Speichermasse des Erdspeichers E wird durch im Zusammenhang mit dem jeweiligen Gebäude G durchgeführte Wärme- und Kältebedarfsberechnung in Abhängigkeit des geplanten Anlagensystems der Wärmeenergieversorgungsanlage zur Gebäudetemperierung festgelegt.

Zunächst erfolgt der Aushub einer Grube für den Erdspeicher E. Nach der Herstellung der Grube für den Erdspeicher E wird die Sohle verdichtet, bis die statisch erforderliche Verdichtung erreicht ist. Nach der Verdichtung der Sohle, wird eine seitliche Dämmung und Abdichtung S eingebaut. Die Dämmung und Abdichtung S wird vorzugsweise in einem zuvor ausgehobenen Graben eingebaut.

Es ist vorgesehen, dass die mit den Rohrleitungen Rn durchzogene Speichermasse nur seitlich und nach oben mit der Dämmung und Abdichtung S versehen wird.

In bevorzugter Ausgestaltung wird mit einem Dämmmaterial eine seitliche erste Schicht S1 als Dämmschicht vorgesehen, insbesondere wird eine druckfeste Perimeterdämmung und/oder Glasschaumschotter verwendet.

Parallel zum Dämmmaterial der ersten Schicht S1 wird von innen nach außen gesehen, außen auf der seitlichen Dämmschicht S1 eine zweite Schicht S2 aus Dichtfolie, vorzugsweise eine PE-Folie oder alternativ eine Teichfolie, insbesondere eine Delta-MS-Folie angeordnet. Die PE-Folie verhindert in vorteilhafter Weise ein Durchströmen des Erdspeichers E mit Oberflächen-, Grund- oder Schichtenwasser. Die zweite Schicht S2 kann auch innen oder sogar innen und außen auf der ersten Schicht S1 angeordnet werden.

Alternativ werden statt der Dichtfolie seitlich umlaufend innen und/oder außen der ersten Schicht S1 Streifenfundamente aus wasserdichtem Beton eingebracht, wodurch ein Durchströmen des Erdspeichers E mit Oberflächen-, Grund- oder Schichtenwasser ebenfalls verhindert wird.

Je nach Baugrundverhältnissen wird auf der zweiten Schicht S2, also der Dichtfolie innen und/oder außen, je nachdem wo die Dichtfolie als zweite Schicht S2 angeordnet ist, noch eine dritte Schicht S3, aus einem Geotextil verlegt. Diese dritte Schicht S3 aus dem Geotextil hat den Vorteil, dass das Geotextil die zweite Schicht S2 aus der Dichtfolie vor Zerstörung durch scharfkantige Bestandteile des nach der Errichtung der Dämmung und Abdichtung S aufzufüllenden Erdreiches des Erdspeichers E schützt.

Wie Figur 3 ferner zeigt, sind in der Speichermasse des Erdspeichers E mehrere Lagen Ln (n=Anzahl der Lagen), im Ausführungsbeispiel drei Lagen L1, L2, L3 mit Rohrleitungen Rn, insbesondere PE-Xa-Leitungen angeordnet.

Als Lage Ln wird die Anordnung der Rohrleitungen Rn (n=Anzahl der Rohrleitungen) in einer ersten Lage in einer ersten unteren Höhenebene E1, beziehungsweise einer zweiten und dritten Lage L2, L3 in einer zweiten und dritten darüberlegenden Höhenebene E2, E3 verstanden.

Nachdem die Schichten S1, S2 und gegebenenfalls die Schicht S3 als seitliche Dämmung eingebaut wurden und der Graben wieder entsprechend verdichtet ist, wird die erste Lage L1 Rohrleitungen Rn in der ersten Ebene E1 eingebaut.

Danach erfolgt das Absanden der Rohrleitungslage L1 der Rohrleitungen Rn der ersten Ebene E1 und der Einbau der Überschüttung mit verdichtungsfähigem Boden, die sogenannte erste Verfülllage V1. Die erste Verfülllage V1 weist eine Dicke von Δz=0,4m über der ersten Rohrleitungslage L1 auf und dient als Auflage für die Rohrleitungslage L2 der Rohrleitungen Rn der zweiten Ebene E2.

Es wird ferner in vorteilhafter Weise vorgeschlagen, das als Speichermasse dienende Erdreich zur Verbesserung der thermischen Speicherfähigkeit mit geeigneten Mitteln aufzubereiten. In einer beispielhaften Ausführungsvariante wird dem Erdreich, welches im Wesentlichen aus Kies- oder Sand besteht, mergelhaltige Erde und/oder Magerbeton beigemischt.

Nachdem das Planum, der ersten Rohrleitungslage in der ersten Ebene E1 und die darüber liegende Verfülllage V1 hergestellt ist, erfolgt die Verdichtung der ersten Verfüllungslage V1 durch entsprechendes Gerät.

Danach erfolgt der Einbau der zweiten Rohrleitungslage L2 in der zweiten Ebene E2.

Anschließend wird darüber die zweite Verfülllage V2 analog hergestellt. Die zweite Verfülllage V2 weist eine Dicke von Δz=0,4m über der zweiten Rohrleitungslage L2 auf. Schließlich erfolgt auf der zweiten Verfülllage V2 der Einbau der dritten Rohrleitungslage L3 in der dritten Ebene E3 und die entsprechende Herstellung der wiederum darüber liegenden dritten Verfülllage V3.

Die Rohrenden der Rohrlagen Rn der einzelnen Lagen werden aus dem Erdspeicher E herausgeführt, so dass endseitig der Rohrenden ein Verteilerblock VT mit einem Vorlauf VT-VL und einem Rücklauf VT-RL (Figur 8 und 9) montiert werden kann.

Die seitliche Dämmung aus der ersten und zweiten Schicht S1, S2 und gegebenenfalls alternativ die angeordnete dritte Schicht S3, wird zur oberen Sandlage, der dritten Verfülllage V3 fugendicht ausgebildet.

Abschließend erfolgt die Herstellung der oberen Dämmung und Abdichtung S, die von unten nach oben gesehen, beispielsweise aus der ersten Dämmschicht S1, insbesondere der druckfesten Perimeterdämmung und/oder Glasschaumschotter hergestellt wird. Darüber und/oder darunter wird die zweite Schicht S2 zur Abdichtung aus Dichtfolie, vorzugsweise eine PE-Folie oder alternativ eine Teichfolie, insbesondere eine Delta-MS-Folie angeordnet, so dass der Erdspeicher E als oberer Abschluss eine Decke aufweist, die zumindest die erste und zweite Schicht S1, S2 aufweist.

Es versteht sich, dass analog zur seitlichen Dämmung Abdichtung S oberhalb und/oder unterhalb der zweiten Schicht S2, je nachdem auf welcher Seite der Dämmschicht S1 eine Dichtfolie S2 angeordnet ist, alternativ noch eine dritte Schicht S3 aus einem Geotextil zum Schutz der zweiten Schicht S2 verlegt sein kann.

Nach Fertigstellung des Erdspeichers E werden die zuvor auf Dichtigkeit überprüften Rohrleitungen Rn mit einer Flüssigkeit gefüllt. Mittels der Flüssigkeit (Sole/Wasser) in den Rohrleitungen Rn wird das als Speichermasse fungierende Erdreich temperiert, das heißt mit Wärmeenergie beladen beziehungsweise wird der Speichermasse im Bedarfsfall Wärmeenergie entzogen.

Die Flüssigkeit mit der die Rohrleitungen Rn gefüllt werden, ist in einer Ausführungsvariante eine Soleflüssigkeit, die zum Betrieb eines Primärkreislaufes PKL eines Wärmepumpensystems A2 geeignet ist.

Bei entsprechender Dimensionierung wird in einer anderen Ausführungsvariante vorgeschlagen, die Rohrleitungen Rn des Primärkreislaufes zum Betrieb des Wärmepumpensystems A2 mit destilliertem Wasser zu befüllen, da richtig ausgelegte (frostfreie) Wärmepumpensysteme A2 auch mit destilliertem Wasser effizient und sicher betrieben werden können.

Die Anzahl der Lagen L1, L2, L3 der Rohrleitungen Rn und die Anzahl n der Rohrleitungen R und die Länge der Rohrleitungen Rn (beispielsweise 1200 bis 1400 m) sowie ein horizontaler Verlegeabstand Δx, Δy von beispielsweise 0,3 m und jeweils ein vertikaler Verlegeabstand Δz (beispielsweise 0,4m) zwischen den Höhenebenen E1, E2, E3 der Lagen L1, L2, L3 wird erstens in Abhängigkeit der Wärme- und Kältebedarfsberechnung des Gebäudes G und zweitens in Abhängigkeit des geplanten Anlagensystems zur Gebäudetemperierung des Gebäudes G und drittens in Abhängigkeit der Art des Erdreichs und der Beschaffenheit des Erdreichs bestimmt.

Der Erdspeicher E ist, wie man in den Figuren 3 sowie 5 und 6 erkennt, vertikal in z-Richtung bezüglich einer Geländeoberkante G1 des Erdreichs nach unten zum angrenzenden Erdreich hin offen. Das heißt, die Speichermasse wird in Abhängigkeit der jeweiligen Erdreichart und in Abhängigkeit der thermischen Eigenschaften des darunter liegenden Erdreichs hinsichtlich des Wärmespeichervermögens thermodynamisch von dem darunter liegenden Erdreich beeinflusst, das heißt sobald die Temperatur unterhalb des Erdspeicher E höher ist, als die Temperatur im mit der Dämmung S umschlossenen Erdspeicher E, erfolgt in vorteilhafter Weise ein Wärmeenergieeintrag aus dem darunter liegenden Erdreich in den Erdspeicher E.

In Abhängigkeit der jeweiligen Bedingungen weisen mehrere Erdspeicher an verschiedenen Orten ihr eigenes sich voneinander unterscheidendes spezifisches Wärmespeichervermögen auf.

Erfindungsgemäß wird durch die bisherige Beschreibung und die nachfolgende Beschreibung der Ausbildung des Erdspeichers E und die nachfolgend beschriebene Anordnung der Rohrleitungen Rn innerhalb der Speichermasse des Erdspeichers E folgende Wirkungsweise erzielt.

Die gesamte Speichermasse des Erdspeichers E wird über die Flüssigkeit im Primärkreislauf PKL eines vorzugsweise angeordnetes Wärmepumpensystems A2 (Sole oder Wasser) in den Rohrleitungen Rn ähnlich einem Plattenwärmetauscher temperiert, das heißt es wird erfindungsgemäß dafür gesorgt, dass das Erdreich des Erdspeichers E durch Wärmeübertragung von den Rohrleitungen Rn in das Erdreich eine möglichst hohe Temperatur erreicht, die hinsichtlich der Entnahme von Wärmeenergie als Quelltemperatur TQuell bezeichnet wird. Je höher die Quelltemperatur TQuell, desto effizienter ist die Wärmeenergieversorgungsanlage in der Gesamtbilanz.

Dabei ist erfindungsgemäß vorgesehen, dass durch die nachfolgend detailliert beschriebene dreidimensionale Verlegegeometrie der Rohrleitungen Rn im gesamten Speichervolumen des Erdspeichers E ein einheitliches Temperaturniveau im zwischen den Rohrleitungen Rn liegenden Erdreich vorliegt.

Das Erzeugen eines einheitlichen Temperaturniveaus in der Speichermasse des Erdspeichers E hat den Vorteil, dass in einem je nach Auslegung bestimmten Speichervolumen beziehungsweise einer bestimmten Speichermasse eine größere Wärmemenge gespeichert werden kann, als in einem Erdspeicher der vergleichsweise das gleiche Speichervolumen beziehungsweise die gleiche Speichermasse aufweist, der aber ungleichmäßig mit Wärmeenergie beladen ist.

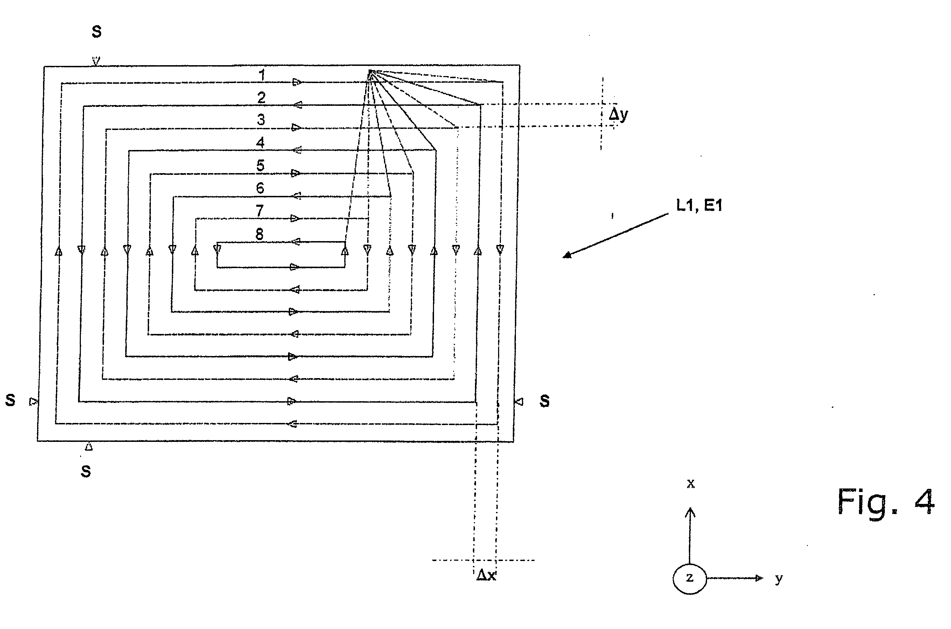

In einer Zusammenschau der Figuren 3 und 4 wird exemplarisch an dem Gebäude G, insbesondere einem Einfamilienhaus aufgezeigt, wie prinzipiell dafür gesorgt wird, dass in der Speichermasse des Erdspeichers E ein einheitliches Temperaturniveau erreicht wird.

Es werden gemäß einem bevorzugten Ausführungsbeispiel beispielsweise acht Rohrleitungen à max. 100 Meter in den Erdspeicher E eingebracht. Die Rohrleitungen werden in der Länge à max. 100 Meter geliefert und sind aus Sicherheitsgründen einstückig hergestellt, das heißt nicht miteinander verschweißt.

Eine Rohrleitung, beispielsweise die erste Rohrleitung R1 wird in den drei Lagen L1, L2, L3 hinsichtlich der Länge gleichmäßig verlegt. Die Rohrleitungen Rn beginnen und enden jeweils am Verteilerblock VT (VT-VL, VT-RL). Der Beginn der jeweiligen Rohrleitung Rn bis zur Hälfte der jeweiligen Rohrleitung Rn wird als Vorlauf und die entsprechende zweite Hälfte bis zum Ende der jeweiligen Rohrleitung Rn wird als Rücklauf bezeichnet. Die Vorlauftemperatur des Fluids im Vorlauf ist durch Abgabe der Wärmeenergie in den Erdspeicher E höher als die Rücklauftemperatur des Fluids im Rücklauf.

Eine Verlegegeometrie der Rohrleitungen Rn ist, wie dargestellt, beispielsweise rechteckig, nahezu quadratisch. Die acht Rohrleitungen R1 bis R8 liegen in einer x/y-Ebene angeordnet in der ersten Rohrleitungslage L1.

Die Rohrleitungen R1 bis R8 werden innerhalb einer Rohrleitungslage L1 im Gegenstromprinzip verlegt, das heißt die Flussrichtung des Fluids innerhalb der Rohrleitungen R1 bis R8 wechselt, gemäß Figur 4 mit den Flussrichtungspfeilen dargestellt, von Rohrleitung R1 zu Rohrleitung R2 usw..

Zudem werden Vorlauf VT-VL und Rücklauf VT-RL der Rohrleitungen R1 bis R8 auf eine bestimmte erfindungsgemäße Art und Weise angeordnet. Die Rohrleitungen R1, R3, R5, R7 beginnen mit ihrem Vorlauf VT-VL in der ersten Rohrleitungslage L1 in der ersten x/y-Ebene E1 und deren Rücklauf VT-RL endet in der dritten Rohrleitungslage L3 in der dritten x/y-Ebene E3.

Die Rohrleitungen R2, R2, R6, R8 beginnen mit ihrem Vorlauf VT-VL in der dritten Rohrleitungslage L3 in der dritten x/y-Ebene E3 und deren Rücklauf VT-RL endet in der ersten Rohrleitungslage L1 in der ersten x/y-Ebene E1.

Dabei wird erfindungsgemäß ferner derart vorgegangen, dass in der dargestellten Verlegegeometrie gemäß Figur 4, beispielsweise ein Vorlauf der ersten Rohrleitung R1 in der ersten Rohrleitungslage L1 in der x/y-Ebene ganz außen rechteckig verlegt wird und über die zweite Rohrleitungslage L2 in z-Richtung immer weiter nach innen geführt wird und in der dritten Rohrleitungslage L3 ebenfalls rechteckig verlegt wird, so dass der Rücklauf der ersten Rohrleitung R1 in der dritten Rohrleitungslage L3 innerhalb der Verlegegeometrie, ein kleines Rechteck bildend, ganz innen angeordnet ist.

Dabei wird erfindungsgemäß gemäß der dargestellten Verlegegeometrie gemäß Figur 4, beispielsweise ein Vorlauf der achten Rohrleitung R8 in der ersten Rohrleitungslage L1 ganz innen als kleines Rechteck verlegt, und über die zweite Rohrleitungslage L2 in z-Richtung immer weiter nach außen geführt, und in der dritten Rohrleitungslage L3 ebenfalls wieder rechteckig verlegt, so dass der Rücklauf der achten Rohrleitung R1 in der dritten Rohrleitungslage L3 innerhalb der Verlegegeometrie, ein großes Rechteck bildend, ganz außen angeordnet ist.

Durch diese Verlegegeometrie ist dafür gesorgt, dass dreidimensional in z-Richtung gesehen in der ersten Rohrleitungslage L1 in der ersten Ebene E1 ganz außen rechteckig verlegt, der Vorlauf der ersten Rohrleitung R1 angeordnet ist. Darüber liegt in der dritten Rohrleitungslage L3 in der dritten Ebene E3 der Rücklauf der achten Rohrleitung R8.

Das heißt es wird prinzipiell dafür gesorgt, dass sich dreidimensional in der x/y-Ebene und den x/z-Ebenen und den y/z-Ebenen der Rohrleitungslagen L1 bis L3 der Vorlauf VT-VL und der Rücklauf VT-RL der acht verschiedenen Rohrleitungen Rn=8 abwechseln und es wird zusätzlich noch dafür gesorgt, dass die nebeneinander liegenden Rohrleitungen Rn im Gegenstromprinzip angeordnet sind. Dadurch wird in vorteilhafter Weise erreicht, dass der dreidimensionale Speicherkörper gleichmäßig erwärmt und bei Bedarf wieder gleichmäßig abgekühlt wird.

Unter Berücksichtigung dieser Grundidee ist die Anzahl n der Lagen Ln, und die Anzahl n der Rohrleitungen Rn sowie die Länge der Rohrleitungen Rn variabel und damit in vorteilhafter Weise an die jeweiligen sich verändernden Randbedingungen, wie Wärme- und Kältebedarf des Gebäudes G, an das geplante Wärmeenergie-Einspeisesystem A zur Gebäudetemperierung und an die Art des Erdreichs anpassbar.

Ferner kann die dreidimensionale Verlegegeometrie je nach den Randbedingungen und den räumlichen Bedingungen unterschiedlich sein, das heißt die Rohrleitungen Rn werden, wie erläutert in den Lagen Ln zwar dreidimensional aber anders als dargestellt, beispielsweise nicht in einer rechteckigen, sondern in einer kreisrunden Geometrie verlegt.

Der Wärmeintrag in den Erdspeicher E erfolgt durch Wärmeübertragung. Die Wärme der Flüssigkeit (Sole oder Wasser) wird über die Rohrleitungen Rn in den Erdspeicher E übertragen.

### Die Wärmeenergieversorgungsanlage:

Anhand der Figur 7 wird schematisch, die mit dem Erdspeicher E in Verbindung stehende Wärmeenergieversorgungsanlage prinzipiell erläutert. Die Wärmeenergieversorgungsanlage wird nachfolgend als Anlage mit dem Bezugszeichen W bezeichnet.

Die Anlage W umfasst Systeme zur Wärmegewinnung, die sogenannten Wärmeenergieeinspeiser, die nach Bedarf variabel zu einer Wärmeenergieversorgungsanlage zusammen konfiguriert werden können.

Die Anlage W nutzt in Ausführungsvarianten verschiedene Wärmeenergieeinspeiser, die wahlweise an die Anlage W angeschlossen beziehungsweise integriert und über den dynamischen Energiemanager DEM gesteuert werden.

Es ist gemäß Figur 7 vorgesehen, Prozesswärme aus Wärmeerzeugungsanlagen, wie Fernwärmeerzeugungsanlagen A3 aus Blockheizkraftwerken beziehungsweise deren Spitzenlastkesseln auf Basis fossiler Energieträger (Braunkohle, Steinkohle, Torf, Erdgas und Erdöl) oder Prozesswärme aus Kaminen A4 beziehungsweise Heizstäben A5 oder Prozesswärme aus Wärmeerzeugungsanlagen die Wärme auf Basis thermochemischer Vorgänge erzeugen, oder auch Wärme aus Abluft-Wärmepumpensystemen A6 zu nutzen, und die von diesen Wärmeenergie-Einspeisesystemen stammende Wärmeenergie in dem Erdspeicher E zwischen zu speichern, wobei stets der dynamische Energiemanager DEM die Speicherung der Wärmeenergie aus den wahlweise angeordneten verschiedenen sogenannten Wärmeenergieeinspeisern A1 bis A7 intelligent steuert.

Mit der sich in der Abluft von kontrollierten Lüftungssystemen befindenden thermischen Energie kann im Wohnungsbau im Regelfall ca. 25-50 % des gesamten Energiebedarfs zur Gebäudetemperierung gedeckt werden. Dieser Energieertrag erfolgt 365 Tage pro Jahr, ist klar kalkulierbar und eine statische Größe. Sie kann über das Abluft-Wärmepumpensystemen A6 einfach und günstig gewonnen werden.

Anlagen W, die allein mit Abluft-Wärmepumpensystemen A6 arbeiten, können nach aktuellem Stand der Technik bereits Primärenergie-Anlagenaufwandszahlen von ep=5 bis 8 erreichen.

Die Anlage W umfasst für die kurzfristige Speicherung von Wärmeenergie stets einen Schichtenpufferspeicher P. Die dort gespeicherte Wärme wird bei Bedarf stets über den dynamischen Energiemanager DEM gesteuert und geregelt und bedarfsabhängig den vorhandenen Wärmeenergieverbrauchssystemen B, wie einem Heizungssystem B1 und/oder einem Warmwasserversorgungssystem B2 zugeführt.

Als Wärmeenergieeinspeiser umfasst die Anlage W neben dem Schichtenpufferspeicher P mindestens eine
- solarthermischen Anlage A1 und eine Sole/Wasser-Wärmepumpenanlage A2 oder
- eine Abluft-/Wärmepumpenanlage A6 und eine Sole/Wasser-Wärmepumpenanlage A2 oder
- eine solarthermischen Anlage A1 und eine Abluft-/Wärmepumpenanlage A6 sowie eine Sole/Wasser-Wärmepumpenanlage A2.

Die genannten Wärmeenergieeinspeiser A1, A2 und A6 dienen der Erzeugung von Wärmeenergie, die zum kurzfristigen Verbrauch bestimmt in dem Schichtenpufferspeicher P gespeichert wird. Die genannten Wärmeenergieeinspeiser A1, A2 und A6 dienen aber auch der Erzeugung von Wärmeenergie, die zum langfristigen Verbrauch bestimmt ist und im Erdspeicher gespeichert wird.

Weitere Wärmeenergieeinspeiser können optional an den Schichtenpufferspeicher beziehungsweise direkt an die Wärmeenergieverbrauchssysteme B, B1, B2 angeschlossen werden. Sie werden innerhalb des Gesamtkonzeptes erfindungsgemäß stets von dem dynamischen Energiemanager DEM gesteuert und geregelt.

Als weitere Wärmeenergieeinspeiser sind optional vorgesehen, beispielsweise ein Fernwärmesystem A3 aus Großkraftwerken oder BHKW's und/oder ein Kamin A4 und/oder Heizstäbe A5.

Als weiteres Wärmeenergie-Einspeisesystem wird auch die Restwärme eines Kühlanlagensystems B3 mit einer Wärme verbrauchenden Kältemaschine A7 angesehen, wobei als Kältemaschinen insbesondere solare Adsorptionskältemaschinen und/oder strom- oder gasbetriebene Kältemaschine mit solarer Wärmeunterstützung zum Einsatz kommen.

Die Kältemaschinen A7 sind somit Verbraucher von Wärmeenergie als auch Wärmeenergieeinspeiser, da die Restwärme erfindungsgemäß noch in einem Erdspeicher einer Wärmeenergieversorgungsanlage genutzt werden kann, wie noch erläutert werden wird.

Die eintragbare Wärmemenge ist beispielsweise in dem Fall, in dem die Wärme von einem solarthermischen Systems A1 erzeugt und verwendet wird, von der Sonnenscheindauer und der Sonnenscheinintensität abhängig.

In vorteilhafter Weise ist es durch eine Konfiguration der erfindungsgemäßen Anlage W unter Ausnutzung eines solarthermischen Systems A1 und insbesondere mittels des integrierten dynamischen Energiemanagers DEM innerhalb der Anlage W möglich, der Speichermasse des Erdspeichers E vorzugsweise über das Wärmepumpensystem A2 Wärme in einem ersten Temperaturbereich ΔT1 des Fluids im solarthermischen System A1 (je nach solarthermischen Systemtyp) zwischen einer Minimal-Einspeisetemperatur Tmin1 von ca. 6°C bis zu einer Maximal-Einspeisetemperatur Tmax1 von bis zu 90-140 °C zuzuführen.

In der Regel wird jedoch gesteuert und geregelt über den dynamischen Energiemanager DEM nach dem Prinzip verfahren, Wärmeenergie aus dem solarthermischen System A1 zunächst zu verbrauchen, insofern ein Bedarf an Wärme vorliegt, bevor sie im Erdspeicher E gespeichert wird.

Jedoch liefert das solarthermische System A1 auch Wärmeenergie in dem ersten Temperaturbereich ΔT1, mit niedrigen Temperaturen, die in einen Schichtenpufferspeicher P und/oder einem Heizungssystem B1 und/oder einem Warmwasserversorgungssystem B2 nicht verwendet werden kann.

Ein wesentlicher Vorteil der Anlage W besteht somit darin, dass die niedrigen Temperaturen des Fluids im solarthermischen System A1, die innerhalb des ersten Temperaturbereiches ΔT1 vorliegen, bisher in einer Anlage W ohne Erdspeicher E nicht verwendet werden konnten.

Diese niedrigen Temperaturen in dem ersten Temperaturbereich ΔT1 liegen zwischen der Minimal-Einspeisetemperatur Tmin1 von ca. 6°C bis zu einer Grenz-Einspeisetemperatur TGrenz bis 35°C.

Bei der vorliegenden Anlage W mit Erdspeicher E wird die bisher nicht genutzte Wärme des solarthermischen Systems A1, die nicht ausreicht, um beispielsweise das Temperaturniveau in einem Schichtenpufferspeicher P eines Warmwasserversorgungssystems B2 oder eines Heizungssystems B1 der Anlage W anzuheben, in vorteilhafter Weise dazu verwendet, das Temperaturniveau im Erdspeicher E anzuheben, indem die Temperatur der Flüssigkeit des Primärkreislaufes des Wärmepumpensystems A2 erhöht, das heißt angehoben wird, wie nachfolgend noch näher erläutert wird.

Dadurch wird die Effizienz des Wärmepumpensystems A2 gesteigert, es wird die Temperatur des Erdspeichers E angehoben und es entsteht der vorteilhafte Effekt, dass jetzt eine größere Wärmemenge der in dem ersten Temperaturbereich ΔT1 gespeicherten Wärmeenergie genutzt wird.

Nur durch die Nutzung des Erdspeichers E als Wärmespeicher ist Wärme in einem Temperaturbereich zwischen der Minimal-Einspeisetemperatur Tmin1 von circa 6°C und TGrenz1 bis circa 35°C speicherbar, wodurch die Effizienz der Anlage W wesentlich verbessert wird.

In Anlagensystemen nach dem Stand der Technik - ohne Speichermöglichkeit - steht für die anfallende Wärme eines solarthermischen Systems A1 in diesem niedrigen ersten Temperaturbereich ΔT1 kein Abnehmer zur Verfügung, wodurch die Wärme verloren geht, und die Gesamtbilanz im Vergleich zu der hier vorgestellten Anlage W wesentlich schlechter ausfällt.

Bevorzugt wird ein Wärmepumpensystem A2 eingesetzt, um dem Erdspeicher E die Wärme zuzuführen und zu entziehen. Mittels des Wärmepumpensystems A2 ist es in vorteilhafter Weise technisch einfach und effizient zwischengespeicherte Wärme aus einem Erdspeicher E mit geringer Volatilität mittels eine Solekreislaufpumpe A21 (Sole/Wasser) im Primärkreislauf PKL des Wärmepumpensystems A2 zuzuführen und wieder zurück zu gewinnen. Die Wärme ist durch das Wärmepumpensystem A2 bedarfsgerecht in den Erdspeicher E bringbar und aus dem Erdspeicher E abrufbar.

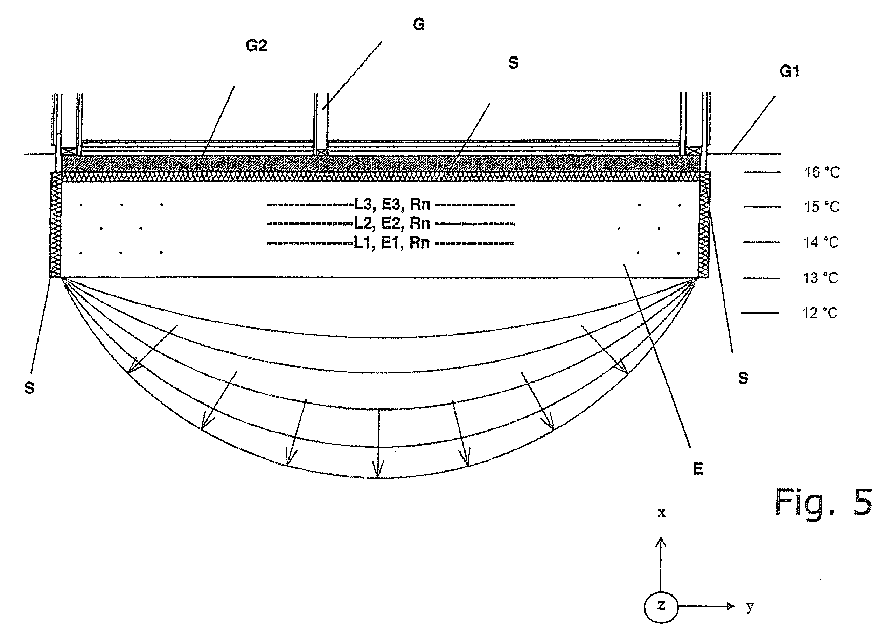

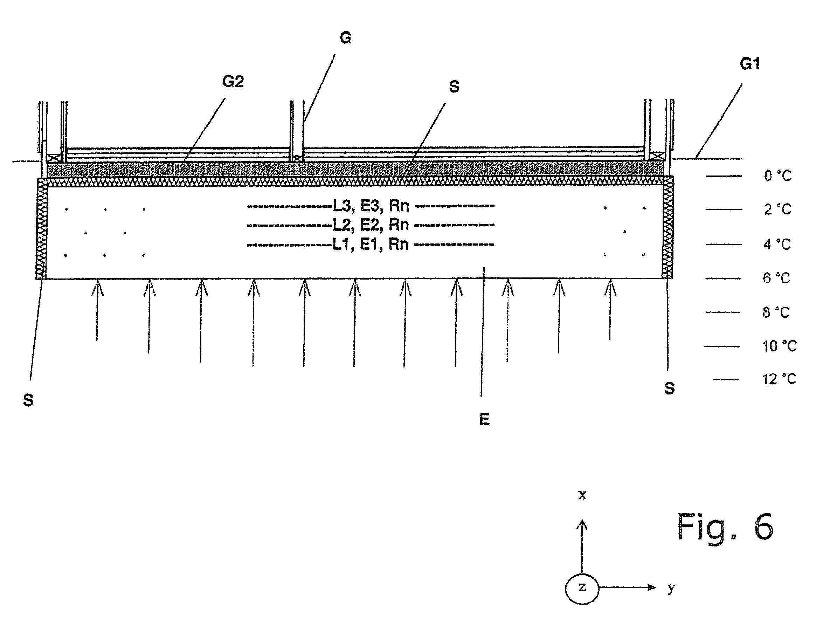

Die Effizienz eines eingesetzten Wärmepumpensystems A2 wird dabei maßgeblich von der Höhe der Quelltemperatur TQuell im Erdspeicher E bestimmt. Die Quelltemperatur TQuell im Erdspeicher liegt nach den umfangreich durchgeführten Versuchen im Jahresverlauf zwischen der maximalen Erdspeichertemperatur TmaxE bei maximal circa 23°C im Sommer und einer Erdspeichertemperatur im Herbstfall von circa 12°C bis 16°C (Figur 5) und eine minimale Erdspeichertemperatur TminE bei minimal 6°C (Figur 6) im Winterfall.

Die Effizienz einer solchen Anlage ist somit in vorteilhafter Weise gegenüber Wärmepumpensystemen mit Tiefenbohrung und ohne Erdspeicher E im Sinne dieser Erfindung sehr hoch.

Als eine wesentliche Maßnahme zur Erhöhung der Effektivität des Anlagensystems A, A2 ist vorgesehen, dass Wärme, die in dem auch zu Heizzwecken nicht effizient verwendbaren niedrigen Temperaturniveau < 35 °C vorliegt, über den dynamischen Energiemanager DEM direkt zur Anhebung der Sole- oder Wassertemperatur im Primärkreislauf PKL des Wärmepumpensystems A2 genutzt wird, wodurch die Effizienz des Wärmepumpensystems A2 stark gesteigert wird. Die Temperaturanhebung der/des Sole/Wassers im Primärkreislauf PKL des Wärmepumpensystem A2 erfolgt alternativ im Vorlauf (Figur 9) oder im Rücklauf (Figur 8) des Wärmepumpensystems A2.

Es konnte nachgewiesen werden, dass eine Anlage W, welche einen Erdspeicher E in der beschriebenen Art und einen Wärmeenergieeinspeiser in Form einer thermischen Solaranlage A1 sowie ein Wärmepumpensystem A2 zum Eintrag und zum Entzug der Wärmeenergie aus dem Erdspeicher E aufweist, eine Primärenergie-Anlagenaufwandszahl von ep< 0, 65 erreicht.

Wird innerhalb des Wärmepumpensystems A2 eine Anhebung der Temperatur der Flüssigkeit (Sole/Wasser), insbesondere eine sogenannte Soleanhebung durchgeführt, wird eine Primärenergie-Anlagenaufwandszahl von ep< 0,4 erreicht.

Wird noch zusätzlich zu den genannten Systemen, dem solarthermischen System A1 und dem Wärmepumpensystem A2 mit Soleanhebung im Wärmepumpensystem A2 ein Abluft-wärmepumpensystem A6 als weiterer Wärmeenergieeinspeiser in die Anlage W integriert, erreicht die Anlage W sogar eine Primärenergie-Anlagenaufwandszahl von ep<0,3.

Die bisher bekannten Anlagensysteme mit einem integrierten Wärmepumpensystem mit herkömmlicher Tiefenbohrung erreichen nur Werte mit einer Primärenergie-Anlagenaufwandszahl von ep>0,65.

Das Erreichen einer Primärenergie-Anlagenaufwandszahl von ep<0,3 entspricht einer Halbierung der Betriebskosten des erfindungsgemäßen Anlagensystems.

### Verschiedene Ausführungen:

Wärmeenergie-Einspeisesystem mit einer solarthermischen Anlage und/oder einem Abluft-Wärmepumpensystem sowie einem Wärmepumpensystems und Wärmeenergieverbrauchern wie beispielsweise einem Heizungssystem und/oder einem Warmwasserversorgungssystem und einem an das Wärmepumpensystem angekoppelten Erdspeicher:
Anhand der Figuren 8 und 9 wird in einer Zusammenschau die erste Ausführungsform in zwei Ausführungsvarianten und ein erfindungsgemäßer Effekt detailliert erläutert, der darin besteht, die Temperatur der Flüssigkeit des Primärkreislaufes PKL des Wärmepumpensystems A2 zu erhöhen.

Diese Vorgehensweise der Erhöhung der Temperatur der Flüssigkeit im Primärkreislauf PKL wird nachfolgend als "Soleanhebung" bezeichnet, wobei als Fluid auch Wasser in Frage kommt.

Die Anlage W umfasst eine solarthermische Anlage A1 und eine Sole/Wasser-Wärmepumpenanlage A2 sowie einen Schichtenpufferspeicher P. Der Sekundärkreislauf des Wärmepumpensystems A2 wird somit mit Wasser betrieben.

Die solarthermische Anlage A1 weist einen Kollektor auf, von dem eine Vorlaufleitung A1-VL abgeht und an dem eine Rücklaufleitung A1-RL ankommt. Der so gebildete Kollektorkreislauf A1-VL, A1-RL wird von einer Solarkreislaufpumpe A11 angetrieben, wobei der Kreislauf A1-VL, A1-RL mit einem ersten Fluid, insbesondere einem Wasser-Propylenglykol-Gemisch gefüllt ist. In dem Kollektorkreislauf ist ein erster Wärmetauscher A12 angeordnet.

Über den ersten Wärmetauscher A12 wird Wärmeenergie ausgetauscht und in den Schichtenpufferspeicher P geleitet, der über einen mit Wasser gefüllten Speicherkreislauf aus einem Vorlauf P-VL und einem Rücklauf P-RL in dem eine Ladekreislaufpumpe P1 integriert ist, gebildet wird.

Von dem Schichtenpufferspeicher P ausgehend oder direkt über weiter nicht näher dargestellte Wärmetauscher können auch Wärmeenergieverbrauchssysteme B (B1, B2) direkt von der solarthermischen Anlage A1 mit Wärmeenergie versorgt werden.

Im Kollektorkreislauf A1-VL, A1-RL befindet sich ferner ein Umschaltarmatur A13 mit den Schaltwegen I, II, III.

Der erste Schaltweg I leitet das erste Fluid über einer ersten Abzweig Rücklaufleitung A1-RL zu dem Kollektor der solarthermischen Anlage A1 zurück.

Der zweite Schaltweg II leitet das erste Fluid über einen zweiten Abzweig, die als Rücklaufleitung-Sole A1-RL-Sole bezeichnet wird, zu einem zweiten Wärmetauscher A22, der zu dem zweiten Wärmepumpensystem A2 gehört, weiter.

Der dritte Schaltweg III steht mit dem ersten Wärmetauscher A12 der solarthermischen Anlage A1 in Verbindung.

Das Wärmepumpensystem A2, über welches insbesondere ein Heizungssystem B1 als Wärmeenergieverbrauchssystem B1 direkt mit Wärme versorgt werden kann, umfasst den Primärkreislauf PKL, der eine Vorlaufleitung A2-PKL-VL und eine Rücklaufleitung A2-PKL-RL aufweist, wobei eine Solekreislaufpumpe A21 in der Rücklaufleitung A2-PKL-RL des Primärkreislaufes PKL angeordnet ist. Die Solarkreislaufpumpe A21 kann auch in der Vorlaufleitung A2-PKL-VL angeordnet sein.

Innerhalb dieses Primärkreislaufes PKL befindet sich ein zweites Fluid, insbesondere die Sole aus einem Wasser-Ethylenglykol-Gemisch. Der Sekundärkreislauf des Wärmepumpensystems A2 ist in der schematischen Darstellung nicht näher dargestellt.

In der Rücklaufleitung A2-PKL-RL des Primärkreislaufes PKL befindet sich nutzbare Wärmeenergie, die über den nicht näher dargestellten Sekundärkreislauf des Wärmepumpensystems A2 noch nicht an eines der Wärmeenergieverbrauchssysteme B abgegeben worden ist.

Es ist vorgesehen, diese Wärmeenergie über die Solekreislaufpumpe A21 in dem Erdspeicher E zu speichern, wobei in den Figuren 8 und 9 stellvertretend für den Erdspeicher E, der bereits beschriebene Rohrleitungs-Verteiler VT-VL, VT-RL des Erdspeichers E, an dem die Rohrleitungen Rn in den Erdspeicher E abgehen bzw. ankommen, dargestellt ist.

Der Unterschied zwischen Figur 8 und Figur 9 besteht darin, dass der zweite Wärmetauscher A22 in der ersten Ausführungsvariante in Figur 8 in der Rücklaufleitung A2-PKL-RL des Primärkreislaufes und in Figur 9 in der zweiten Ausführungsvariante Vorlaufleitung A2-PKL-VL des Primärkreislaufes angeordnet ist.

Es ist erfindungsgemäß ebenfalls vorgesehen, diese im Kollektorkreis der solarthermischen Anlage A1 verfügbare Wärmeenergie, die in dem ersten Fluid des Kollektorkreislaufes A1-VL, A1-RL gespeichert vorliegt, über das Wärmepumpensystem A2 zur Speicherung in dem Erdspeicher E verfügbar zu machen.

Dadurch wird jetzt in vorteilhafter Weise, die bisher schon genutzte als auch die bisher nicht genutzte Wärme der solarthermischen Anlage, die nicht ausreicht, um das Temperaturniveau im Schichtenpufferspeicher P anzuheben, in vorteilhafter Weise dazu verwendet, das Temperaturniveau der Sole (zweites Fluid zumeist ein Wasser-Ethylenglykol-Gemisch) des Wärmepumpensystems A2 temperaturseitig anzuheben.

Das zweite Fluid (die Sole) im Primärkreislauf PKL des Wärmepumpensystems A2 weist zumeist Temperaturen zwischen -5°C und +25°C auf, typischerweise beträgt das Temperaturniveau zwischen etwa 5°C und 10°C und liegt damit deutlich unterhalb der vorhandenen Temperatur im Kollektorkreislauf A1-VL, A1-RL der solarthermischen Anlage A1, selbst dann noch, wenn Wärmeenergie des ersten Fluids über den Schichtenpufferspeicher P aus dem Kollektorkreislauf A1-VL, A1-RL weitestgehend entzogen wurde.

Zur Erzeugung eines Temperaturhubes im Primärkreislauf PKL wird das Umschaltarmatur A13 von dem Schaltweg III-I auf den Schaltweg III-II umgeschaltet, so dass das erste Fluid den zweiten Abzweig die Rücklaufleitung-Sole A1-RL-Sole (Figur 8) durchströmt, wonach der zweite Wärmetauscher A22 in der ersten Ausführungsvariante über die Rücklaufleitung A2-PKL-RL (Figur 8) oder in der zweiten Ausführungsvariante die Vorlaufleitung A2-PKL-VL durchströmt wird, so dass über den zweiten Wärmetauscher A22 in beiden Varianten Wärmeenergie zur Soleanhebung an den Primärkreislauf PKL des Wärmepumpensystems A2 abgegeben wird.

Der Primärkreislauf PKL ist an den Vorlauf des Verteilers VT-VL angeschlossen, wodurch es in vorteilhafter Weise zu einer Speicherung von überschüssiger Wärmeenergie aus dem Kollektorkreislauf A1-VL, A1-RL im Erdspeicher E kommt.

Für die verschiedenen saisonalen Zeiträume wird der die Anlage W steuernde und regelnde dynamische Energiemanager DEM folgendermaßen priorisiert.

Die Steuerung und Regelung über den dynamischen Energiemanager:
In einem Übergangszeitraum im Frühling und im Herbst wird die Wärmeenergie der solarthermischen Anlage A1, die im ersten Temperaturbereich ΔT1 oberhalb der Grenz-Einspeisetemperatur TGrenz von circa 35°C liegt, zumeist direkt verbraucht oder im Schichtenpufferspeicher P kurzfristig gespeichert. Wenn überschüssige Wärmeenergie oberhalb der Grenz-Einspeisetemperatur TGrenz innerhalb des ersten Temperaturbereiches ΔT1 von circa 35°C bis beispielsweise 90-140°C vorhanden ist, wird die Wärmeenergie durch die beschriebene Soleanhebung mittels des Wärmepumpensystems A2 im Erdspeicher E gespeichert. Wärmeenergie mit niedrigen Temperaturen innerhalb des ersten Temperaturbereiches ΔT1 bis 35°C (TGrenz) die im Schichtenpufferspeicher P nicht gespeichert werden kann, wird durch die Soleanhebung mittels des Wärmepumpensystems A2 im Erdspeicher E gespeichert. Bei Bedarf bringt das Wärmepumpensystem A2 das Wasser im sekundären Kreislauf des Wärmepumpensystems A2 auf die vom Verbraucher gewünschte Heiztemperatur. Durch die Soleanhebung wird die Temperatur im Erdspeicher E und im Primärkreislauf angehoben und das Wärmepumpensystem A2 benötigt im Bedarfsfall weniger elektrische Energie, da der Primärkreislauf PKL durch die Soleanhebung und/oder durch den aufgeladen Erdspeicher mit höheren Temperaturen betrieben wird, als es ohne Soleanhebung und/oder mit einem Wärmeenergie beladenen Erdspeicher E als Wärmeenergie- Langzeitspeicher der Fall ist.

Im Sommer wird die Wärmeenergie der solarthermischen Anlage A1 direkt verbraucht oder im Schichtenpufferspeicher P kurzfristig gespeichert. Wärmeenergie mit niedrigen Temperaturen, innerhalb des genannten ersten Temperaturbereichs ΔT1, zwischen der Minimal-Einspeisetemperatur Tmin1 von ca. 6°C bis zu der Grenz-Einspeisetemperatur TGrenz bis 35°C, die in dem Schichtenpufferspeicher P sowieso nicht gespeichert werden kann, und jetzt auch die gesamte überschüssige Wärmeenergie oberhalb der Grenz-Einspeisetemperatur TGrenz von 35°C des ersten Temperaturbereiches ΔT1 von circa 35°C bis beispielsweise 90°C-140°C, wird durch die beschriebene Soleanhebung mittels des Wärmepumpensystems A2 im Erdspeicher E gespeichert. Der Heizbedarf ist im Sommer gering. Nur im eher seltenen Bedarfsfall bringt das Wärmepumpensystem A2 das Wasser im sekundären Kreislauf des Wärmepumpensystems A2 auf die vom Verbraucher gewünschte Temperatur. Somit steht die Wärmeenergie im Sommer zu einem großen Anteil zur Beladung des Erdspeichers E zur Verfügung.

Im Winter wird die Wärmeenergie der solarthermischen Anlage A1 direkt verbraucht oder die Wärmeenergie wird im Schichtenpufferspeicher P kurzfristig gespeichert. Wärmeenergie mit niedrigen Temperaturen, zwischen der Minimal-Einspeisetemperatur Tmin1 von ca. 6°C bis zu der Grenz-Einspeisetemperatur TGrenz bis 35°C innerhalb des genannten ersten Temperaturbereichs ΔT1 die in dem Schichtenpufferspeicher P sowieso nicht gespeichert werden kann, und wenn überhaupt vorhanden, die gesamte überschüssige Wärmeenergie oberhalb der Grenz-Einspeisetemperatur TGrenz des ersten Temperaturbereiches ΔT1 von circa 35°C bis beispielsweise 90-140°C, wird durch die beschriebene Soleanhebung mittels des Wärmepumpensystems A2 im Erdspeicher E gespeichert. Der Heizbedarf ist im Winter sehr groß, so dass in dem oft eintretenden Bedarfsfall das Wärmepumpensystem A2 das Wasser im sekundären Kreislauf des Wärmepumpensystems A2 auf die vom Verbraucher gewünschte Heiztemperatur bringt. Durch die Soleanhebung wird die Temperatur im Erdspeicher E und im Primärkreislauf angehoben und das Wärmepumpensystem A2 benötigt im Bedarfsfall weniger elektrische Energie, da der Primärkreislauf PKL durch die Soleanhebung und/oder durch den aufgeladen Erdspeicher E mit höheren Temperaturen betrieben wird, als es ohne Soleanhebung und/oder Erdspeicher E als Wärmeenergie-Langzeitspeicher der Fall ist. Der Heizbedarf ist im Winter sehr hoch. Im oft eintretenden Bedarfsfall bringt das Wärmepumpensystem A2 das Wasser im sekundären Kreislauf des Wärmepumpensystems A2 auf die vom Verbraucher gewünschte Temperatur. Somit steht die Wärmeenergie im Winter kaum zur Beladung des Erdspeichers E zur Verfügung. Es kommt sogar zu einer Entladung des Erdspeichers E unter Nutzung der im Erdspeicher E gespeicherten Wärmeenergie.

### Kennlinien der Wärmeenergieversorgungsanlage:

Bei Wärmeentzug aus dem Erdspeicher E wird durch den stattfindenden Wärmeeintrag in den Erdspeicher E und durch den beschriebenen Aufbau des Erdspeichers E dafür gesorgt, dass das Temperaturniveau im gesamten Speichervolumen in einem zweiten den Erdspeicher E betreffenden Temperaturbereich ΔT2 gleichmäßig sinkt beziehungsweise ansteigt.

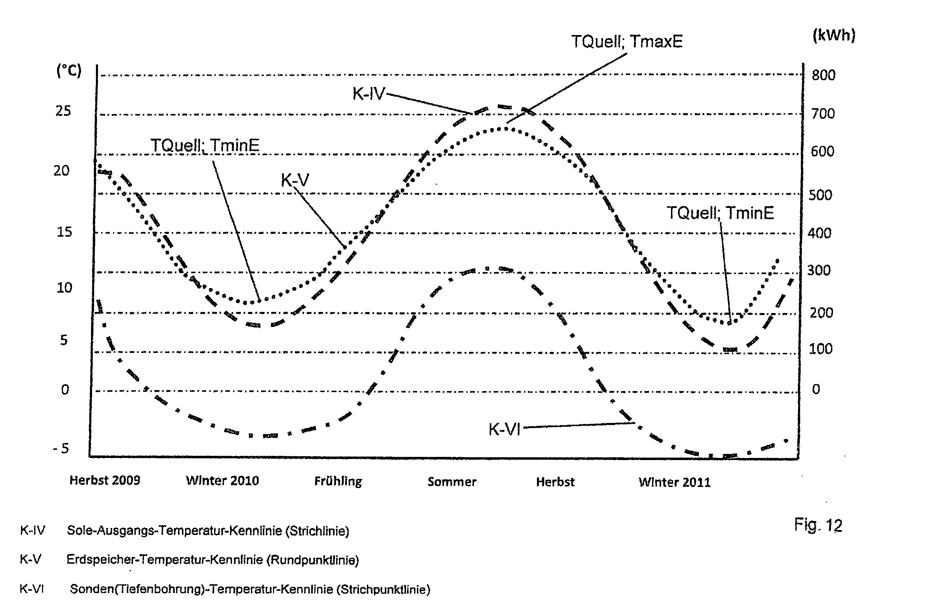

Der zweite Temperaturbereich ΔT2 des gesamten Speichervolumens des Erdspeichers E bewegt sich nach den Versuchsergebnissen zwischen einer Minimal-Erdspeichertemperatur TminE und einer Maximal-Erdspeichertemperatur TmaxE, wie Figur 12 anhand der Erdspeicher-Temperatur-Kennlinie K-V (Rundpunktlinie) im mehrjährigen zeigt.

In Versuchen hat sich heraus gestellt, dass die Temperatur im Erdspeicher E, beispielsweise eines Einfamilienhauses in Nord- und Mitteleuropa, im Jahresverlauf (siehe Fig. 5 und 6 sowie Figur 12) nur zwischen TmaxE circa 23°C im sogenannten Sommer-/ Herbstfall und TminE circa 6 °C im sogenannten Winterfall pendelt.

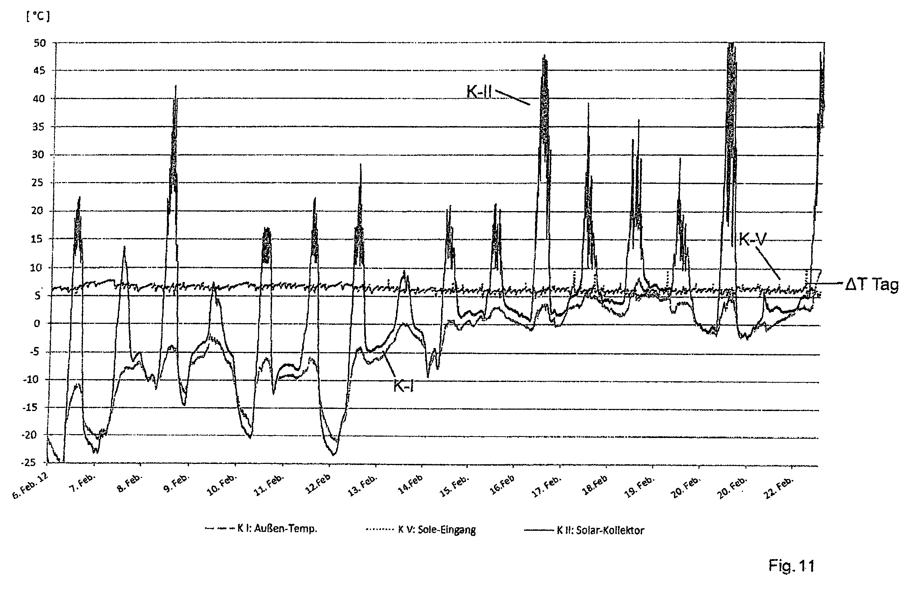

Die Veränderung des Temperaturniveaus im Erdspeicher E erfolgt, wie Figur 11 anhand der Erdspeicher-Temperatur-Kennlinie K-V (Rundpunktlinie) zeigt, aufgrund der Erdmasse langsam, das heißt mit einer geringen Volatilität. Die Volatilität ist abhängig vom Wärme-/Kältebedarf sowie den gewählten Wärmeenergie-Einspeisesystemen an der Anlage W zur Wärmeversorgung des Gebäudes G.

Ferner hat sich in Versuchen herausgestellt, dass das Temperaturniveau im seitlich angrenzenden Erdreich des Erdspeichers E im Jahresverlauf ähnlichen Schwankungen ausgesetzt ist und sich das Temperaturniveau im seitlichen Erdreich außerhalb des Erdspeichers E vergleichsweise nur geringfügig von dem Temperaturniveau im Erdspeicher E unterscheidet.

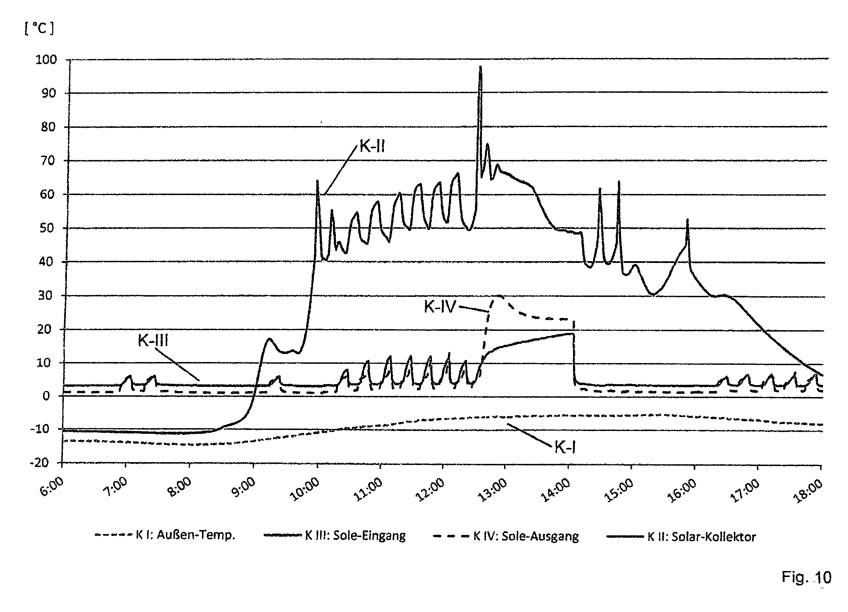

Gemäß Figur 10 unterliegt der tägliche solare Wärmeenergieeintrag eines solarthermischen Systems A1 in dem Erdspeicher E gegenüber dem geringe Schwankungen aufweisenden Erdspeicher E hohen Schwankungen, das heißt der Wärmeeintrag weist eine hohe Volatilität auf, wie die Solarkollektor-Temperatur-Kennlinie K-II der Figur 10 verdeutlicht.

Ferner ist die tägliche Wärmeentnahme aus dem Erdspeicher E von den Wetterverhältnissen und vor allem dem Nutzerverhalten abhängig, und unterliegt ebenfalls hohen Schwankungen und kann insgesamt nur begrenzt im Voraus berechnet werden.

Diese/r oszillierende Wärmeeintrag gemäß der Solarkollektor-Temperatur-Kennlinie K-II der Figuren 10 und 11 führt in vorteilhafter Weise aufgrund der Speichermasse nur zu einer kleinen Veränderung der Temperatur ΔTTag des Erdspeichers E, wie anhand der Erdspeicher-Temperatur-Kennlinie K-V (Rundpunktlinie) der Figur 11 deutlich wird. Die Temperatur im Erdspeicher E verändert sich innerhalb von Tagen nur sehr langsam.

In vorteilhafter Weise gleicht der Erdspeicher E einerseits die Volatilität der anfallenden Wärme einer solarthermischen Anlagensystem A1 oder anderer als Wärmeenergieeinspeiser gewählter volatiler Systeme (beispielsweise ein Kamin A4) aus und speichert die Wärme in der Speichermasse des Erdspeichers E zwischen.

In vorteilhafter Weise gleicht der Erdspeicher E andererseits auch die Volatilität der entnommenen Wärme des Wärmepumpensystems A2 oder anderer gewählter volatiler Systeme zur Entnahme der Wärmeenergie aus, in dem der Erdspeicher E zwischengespeicherte Wärmeenergie langsam und gleichmäßig wieder aus der Speichermasse des Erdspeicher E abgibt.

Die Massenträgheit im Erdspeicher E führt insbesondere im Winterfall, siehe insbesondere Figur 6 dazu, dass sich in vorteilhafter Weise aus dem nach unten angrenzenden Erdreich des seitlich umbauten Erdspeichers E ein Wärmeenergiestrom in den Erdspeicher E in vertikaler Richtung z hinein einstellt. Das hat zur Folge, dass die Einspeisetemperatur TminE im Erdspeicher E bei richtiger Auslegung des Anlagensystems A nicht unter 6°C fällt.

Die Speichermasse des Erdspeichers E sowie die Auslegung der Rohrleitungen Rn und die Anzahl Lagen Ln und die Anzahl der Rohrleitungen Rn sowie die entsprechenden Leitungslängen werden somit nicht nur an den Wärmebedarf des Gebäudes G, sondern in vorteilhafter Weise auch an den Kühlbedarf des Gebäudes G angepasst.

Bei der Anpassung wird, wie bereits erläutert, die Art des Erdreiches des Erdspeicher E berücksichtigt. Darüber hinaus wird der Wärmebedarf beziehungsweise der Kühlbedarf des Gebäudes G in Abhängigkeit der geografischen und/oder klimatischen Lage des Gebäudes G berücksichtigt und angepasst. Das bereits vorhandene Temperaturniveau des Erdreiches des Erdspeichers E und der Wärmebedarf beziehungsweise der Kühlbedarf unterscheidet sich nämlich in Abhängigkeit der geografischen und/oder klimatischen Lage des mit einem Erdspeicher E versehenen Gebäudes G.

Figur 10 verdeutlicht in einem ersten Temperatur/Zeit Diagramm die Vorgehensweise und die Effekte der Soleanhebung anhand eines Tagesverlaufs. Eine Außen-Temperatur-Kennlinie K-I des Gebäudes G ist als Viereckpunktlinie dargestellt.

Es wird deutlich anhand der Solarkollektor-Temperatur-Kennlinie K-II, dass die Temperatur des ersten Fluids der solarthermischen Anlage A1 im Vorlauf A1-VL des Kollektorkreislaufes A1-VL, A1-RL innerhalb eines Tages zwischen 0°C und 90°C schwankt. Zudem oszilliert die Fluidtemperatur im Tagesverlauf in bestimmten Zeiträumen und Zeitabständen in Abhängigkeit der Sonneneinstrahlung und weist die beschriebene hohe Volatilität auf.

Erfindungsgemäß wird mit Hilfe des dynamischen Energiemanager DEM der Anlage W dafür gesorgt, dass die Wärmeenergie in dieser volatilen Phase entweder sofort verbraucht oder in den Schichtenpufferspeicher P gefahren wird. Die überschüssige Wärmeenergie wird erfindungsgemäß entsprechend der in der solarthermischen Anlage A vorliegenden Volatilität durch die Soleanhebung in der gleichen Volatilität von dem Wärmepumpensystems A2 aufgenommen und über das Wärmepumpensystem A2 einem Wärmeenergieverbrauchssystem B zugeführt und direkt verbraucht und/oder der Erdspeicher E wird mit Wärmeenergie beladen. Diese erfindungsgemäße Vorgehensweise wird durch die hinsichtlich der Temperatur langsam ansteigende oszillierende Sole-Eingangs-Temperatur-Kennlinie K-III (durchgehende Linie) und durch die ebenfalls langsam ansteigende um eine bestimmten Betrag über der Sole-Eingangs-Temperatur liegenden Sole-Ausgangs-Temperatur-Kennlinie K-IV (Strichlinie) verdeutlicht.

Die Figur 11 verdeutlicht, dass die Fluidtemperatur im Vorlauf A1-VL des Kollektorkreislaufes A1-VL, A1-RL, dargestellt anhand der Solarkollektor-Temperatur-Kennlinie K-II (durchgehende Linie) der solarthermischen Anlage Tag für Tag im Ausführungsbeispiel innerhalb von sechzehn Versuchstagen und ebenfalls innerhalb des Tages oszilliert, wie Figur 11 in dem zweiten Temperatur/Zeit zeigt. Es handelt sich dabei um den sogenannten Winterfall, wie anhand der Außen-Temperatur-Kennlinie K-I (Viereckpunktlinie) deutlich wird. Erfindungsgemäß wird auch im Winterfall mit Hilfe des dynamischen Energiemanagers DEM der Anlage W dafür gesorgt, dass die Wärmeenergie in dieser volatilen Phase entweder sofort verbraucht oder in den Schichtenpufferspeicher P gefahren wird. Die überschüssige Wärmeenergie wird voraussichtlich sehr gering sein. Liegt überschüssige Wärmeenergie vor, wird wie zu Figur 10 beschrieben verfahren. Im Winterfall wird gegebenenfalls Wärmeenergie aus dem Erdspeicher E entnommen. Figur 11 macht aber anhand der Erdspeicher-Temperatur-Kennlinie K-V (Rundpunktlinie) deutlich, dass sich die Temperatur im Erdspeicher E nur geringfügig ändert. Dieser Effekt wird, wie bereits erläutert, insbesondere auch dadurch erreicht, dass sich in vorteilhafter Weise aus dem nach unten angrenzenden Erdreich des seitlich umbauten Erdspeichers E ein Wärmeenergiestrom in den Erdspeicher E in vertikaler Richtung z hinein einstellt, insofern der nach unten offene Erdspeicher E die Temperatur des den Erdspeicher E umgebenden Erdreichs unterschreitet.

Zusammengefasst handelt es sich somit um einen (nach unten) offenen "oszillierenden" Puffer-Speicher (ooPS) oder Erdspeicher, der oszillierend anfallende Wärmeenergie entsprechend gesteuert und geregelt durch einen dynamischen Energiemanager DEM ebenfalls oszillierend in einem Wärmepumpensystem A2 und/oder einem Erdspeicher E verfügbar macht, wobei der Erdspeicher E nach unten offen ist und durch den Wärmeenergieeintrag aus einer solarthermischen Anlage A1 und gegebenenfalls aus dem darunter liegenden Erdreich eine minimale Erdspeichertemperatur TminE nicht unterschreitet, wie abschließend Figur 12 in einem dritten Temperatur/Zeit Diagramm zeigt.

Im Vergleich zu den Temperaturen im jährlichen Temperaturverlauf einer Sonden (Tiefenbohrung) gemäß der Sonden-Temperatur-Kennlinie K-IV (Strichpunktlinie) und der Erdspeicher-Temperatur-Kennlinie K-V (Rundpunktlinie) ist gemäß Figur 11 festzustellen, dass die Kennlinie K-IV wesentlich unterhalb der Kennlinie K-V verläuft und im Winterfall in den Frostbereich kommt. Die Erdspeicher-Temperatur-Kennlinie K-V unterschreitet die Temperatur von 6° TminE nicht, zudem dass die Erdspeicher-Temperatur-Kennlinie K-V parallel zu der Temperatur des ersten Fluids der solarthermischen Anlage A1 im Vorlauf A1-VL des Kollektorkreislaufes A1-VL, A1-RL verläuft, die durch die Sole-Ausgangs-Temperatur-Kennlinie (Strichlinie) gekennzeichnet ist. Durch die beschriebene Vorgehensweise folgt die Erdspeicher-Temperatur-Kennlinie K-V im Jahresverlauf der Sonden-Temperatur-Kennlinie K-IV (Strichpunktlinie) sinusförmig, wodurch der Einfluss der Soleanhebung des Wärmepumpensystems A2 auf die Temperatur im Erdspeicher E deutlich wird.

### Bezugszeichenliste

- E: Erdspeicher
- G: Gebäude
- G1: Geländeoberkante
- G2: Bodenplatte des Gebäudes
- An: Wärmeenergie-Einspeisesystem (n=Systemtyp)
- A1: solarthermisches System
- A1-VL: Vorlauf-Solarkreislauf
- A1-RL: Rücklauf-Solarkreislauf (erster Abzweig)
- A1-RL-Sole: Rücklauf Solarkreislauf Soleanhebung (zweiter Abzweig)
- A1-RL-71: Rücklauf Antriebswärmekreislauf (zweiter Abzweig)
- A11: Solarkreislaufpumpe
- A12: erster Wärmetauscher
- A13: Umschaltarmatur
- I: erster Schaltweg
- II: zweiter Schaltweg
- III: dritter Schaltweg
- A2: Wärmepumpensystem (Sole/Wasser)
- A21: Solekreislaufpumpe
- A22: zweiter Wärmetauscher
- PKL: Primärkreislauf Wärmepumpensystem
- A2-PKL-VL: Vorlauf Primärkreislauf Wärmepumpensystem
- A2-PKL-RL: Rücklauf Primärkreislauf Wärmepumpensystem
- A3: Fernwärmesystem aus Großkraftwerken oder BHKW's
- A4: Kamin
- A5: Heizstäbe
- A6: Abluft-Wärmepumpensystem
- A7: Kältemaschine
- A71-VL: Vorlauf Antriebswärmekreislauf Adsorptions-Kältemaschine
- A71-RL: Rücklauf Abwärme Adsorptions-Kältemaschine
- A71: Kreislaufpumpe im Kreislauf Wärmetauscher A22 und Kältemaschine /Absorptionskältemaschine
- A72: Restwärmekreislaufpumpe im Kreislauf Kältemaschine A22 und Erdspeicher E
- B: Wärmeenergieverbrauchssystem
- B1: Heizungssystem
- B2: Warmwasserversorgungssystems
- B3: Kühlsystem
- DEM: dynamischer Energiemanager
- P: Pufferspeicher (Schichtenpufferspeicher)
- P1: Ladekreislaufpumpe
- P-VL: Vorlauf Schichtenpufferspeicher
- P-RL: Rücklauf Schichtenpufferspeicher
- Rn: Rohrleitung (n=Anzahl der Rohrleitungen)
- S: Dämmungs- und Abdichtungsstruktur
- S1: erste Schicht (Dämmschicht)
- S2: zweite Schicht (Abdichtungsschicht)
- S3: dritte Schicht (Schutzschicht (Geotextil)
- VT: Verteiler
- VT-VL: Verteiler-Vorlaufseite
- VT-RL: Verteiler-Rücklaufseite
- Ln: Lagen der Rohrleitungen (n=Anzahl der Lagen)
- L1: erste Lage
- L2: zweite Lage
- L3: dritte Lage
- En: Ebenen (n=Anzahl der Ebenen)
- E1: erste Ebene
- E2: zweite Ebene
- E3: dritte Ebene
- Vn: Verfülllagen (n=Anzahl der Verfülllagen)
- V1: erste Verfülllage
- V2: zweite Verfülllage
- V3: dritte Verfülllage
- R1/L1: erste Rohrleitung in der ersten Lage L1
- R8/L3: achte Rohrleitung in der dritten Lage L3
- x: horizontale Richtung in einer x/y-Ebene
- y: horizontale Richtung quer zur x-Richtung in der x/y-Ebene
- z: vertikale Richtung quer zur x/y-Ebene
- Δx: horizontaler Verlegeabstand der Rohrleitungen in der jeweiligen x/y-Ebene
- Δy: horizontaler Verlegeabstand der Rohrleitungen in der jeweiligen x/y-Ebene
- Δz: vertikaler Verlegeabstand von Lage zu Lage in den x/y-Ebenen
- ΔT1: erster Temperaturbereich
- Tmin1: Minimal-Einspeisetemperatur
- Tmax1: Maximal-Einspeisetemperatur
- TGrenz: Grenz-Einspeisetemperatur
- TminE: Minimal-Erdspeichertemperatur
- TmaxE: Maximal-Erdspeichertemperatur
- ΔTTag: durchschnittliche Veränderung der Temperatur des Erdspeichers am Tag
- TQuell: Quelltemperatur
- ΔT2: zweiter Temperaturbereich
- ep: Primärenergie-Anlagenaufwandszahl
- GL1: untere Grenzlinie
- GL2: obere Grenzlinie
- K-I: Außentemperatur-Kennlinie
- K-II: Solarkollektortemperatur-Kennlinie
- K-III: Sole-Eingangstemperatur-Kennlinie
- K-IV: Sole-Ausgangstemperatur-Kennlinie
- K-V: Erdspeicher-Temperatur-Kennlinie
- K-VI: Sonden-Temperatur-Kennlinie (Tiefenbohrung)

## Patentansprüche

1. Wärmeenergieversorgungsanlage (W), welche Wärmeenergie für mindestens ein Wärmeenergieverbrauchssystem (B; B1, B2, B3) aus mindestens einem Wärmeenergie-Einspeisesystem (An) bereitstellt, umfassend
- mindestens eine solarthermische Anlage (An; A1) zur Gewinnung von in einem Fluid eines Kollektorkreislaufes gespeicherter Solarwärme und/oder
- mindestens ein Abluft-Wärmepumpensystem (An; A6) zur Gewinnung von in einem gasförmigen Fluid des Kreislaufes gespeicherter Wärme sowie
- mindestens ein Wärmepumpensystem (An; A2) zur Gewinnung von in einem Fluid eines primären Wärmepumpenkreislaufes (PKL) eines Wärmepumpensystems (An; A2) gespeicherter Erdwärme,
- wobei der Kollektorkreislauf der solarthermischen Anlage (An; A1) und/oder der Kreislauf des Abluft-Wärmepumpensystems (An; A6) mit dem primären Wärmepumpenkreislauf (PKL) des Wärmepumpensystems (A2) über je einen Wärmetauscher (A22) mit einer Wärmeenergie aufnehmenden und abgebenden im Erdreich angeordneten Einrichtung (E) thermodynamisch in Verbindung steht/stehen, und
- die gewonnene Wärmeenergie aus der solarthermischen Anlage (An; A1) und/oder dem Abluft-Wärmepumpensystem (An; A6) über den oder die Wärmetauscher (A22) im primären Wärmepumpenkreislauf (PKL) des Wärmepumpensystems (An; A2) entweder einem der an das Wärmepumpensystem (An; A2) sekundärseitig angeschlossenen Wärmeenergieverbrauchssysteme (B; B1, B2) zugeführt oder in dem Erdspeicher gespeichert und im Bedarfsfall über den primären Wärmepumpenkreislauf (PKL) des Wärmepumpensystems (An; A2) wieder entnommen wird,
- wobei die Einrichtung (E) bezüglich einer Geländeoberkante (G1) des Erdreichs ein mit einer oberen und einer seitlich umlaufenden Dämmungs- und Abdichtungsstruktur (S) versehener nach unten offener Erdspeicher ist,
- der als Teil des primären Wärmepumpenkreislaufes (PKL) des Wärmepumpensystems (A2) aus mehreren an einem Verteilerblock-Vorlaufseite (VT-VL) beginnenden und einem Verteilerblock-Rücklaufseite (VT-RL) endenden Rohrleitungen (Rn) ausgebildet ist, die in mehreren übereinander liegenden horizontalen Ebenen (En) mehrere Rohrleitungslagen (Ln) bilden, die unterhalb der innerhalb der Dämmungs- und Abdichtungsstruktur (S) angeordneten Verfülllage (Vn) aus Erdreich liegen, und
- die mehreren Rohrleitungen (Rn) über die mehreren Ebenen (En) geführt sind, und die mehreren Rohrleitungen (Rn) gemeinsam in jeder der Ebenen (En) die Rohrleitungslage (Ln) bilden,
**dadurch gekennzeichnet, dass**
- die mehreren innerhalb der Ebenen (En) nebeneinander liegenden Rohrleitungen (Rn), die Fließrichtung des im primären Wärmepumpenkreislauf (PKL) des Wärmepumpensystems (A2) angeordneten Fluids betreffend, zu einer Vereinheitlichung des Temperaturniveaus im Erdspeicher in einer dreidimensionalen Verlegegeometrie im Gegenstromprinzip angeordnet sind, und
- die mehreren nebeneinander liegenden Rohrleitungen (Rn) innerhalb der Ebenen (En) derart angeordnet sind, dass eine Vorlaufseite (VL) einer Rohrleitung (R1) abwechselnd neben einer Rücklaufseite (RL) einer nächstliegenden anderen Rohrleitung (R8) usw. angeordnet ist.

2. Wärmeenergieversorgungsanlage (W) nach Anspruch 1,
**dadurch gekennzeichnet, dass**
der jeweilige Wärmetauscher (A22), in Fließrichtung des jeweiligen Fluids im primären Wärmepumpenkreislauf (PKL) des Wärmepumpensystems (A2) gesehen, im Rücklauf (A2-PKL-RL) des primären Wärmepumpenkreislaufs (PKL) vor dem Erdspeicher (E) oder im Vorlauf (A2-PKL-VL) des primären Wärmepumpenkreislaufs (PKL) hinter dem Erdspeicher (E) angeordnet ist.

3. Wärmeenergieversorgungsanlage (W) nach Anspruch 1,
**dadurch gekennzeichnet, dass**
der Kollektorkreislauf der solarthermischen Anlage (An; A1) und/oder der Kreislauf des Abluft-Wärmepumpensystems (An; A6) jeweils eine Umschaltarmatur (A13) umfasst, die das jeweilige Fluid über einen ersten Abzweig (A1-RL; Schaltweg III-I) in dem jeweiligen Kreislauf führt oder die das jeweilige Fluid im Kollektorkreislauf und/oder im Kreislauf des Abluft-Wärmepumpensystems (An; A6) zur Temperaturanhebung des in dem primären Wärmepumpenkreislauf (PKL) des Wärmepumpensystems (A2) angeordneten Fluids (Soleanhebung) nutzt, und über einen zweiten Abzweig (A1-RL-Sole; Schaltweg III-II) dem jeweiligen Wärmetauscher (A22) im primären Wärmepumpenkreislauf (PKL) des Erdspeichers (E) zuführt.

4. Wärmeenergieversorgungsanlage (W) nach Anspruch 1,
**dadurch gekennzeichnet, dass**
die Wärmeenergieversorgungsanlage (W) ein einziges Steuer- und Regelgerätes umfasst, das mit allen vorhandenen Wärmeenergieverbrauchssystemen (B; B1, B2) und allen vorhandenen Wärmeenergie-Einspeisesystemen (An) in Verbindung steht.

5. Verfahren zur Bereitstellung von Wärmeenergie für mindestens ein Wärmeenergieverbrauchssystem (B; B1, B2, B3) einer Wärmeenergieversorgungsanlage (W), die mindestens ein Wärmeenergie-Einspeisesystem (An) umfasst, wobei die Wärmeenergie
- aus in einem Fluid gespeicherter Solarwärme eines Kollektorkreislaufes mindestens einer solarthermischen Anlage (An; A1) und/oder
- aus in einem gasförmigen Fluid gespeicherter Wärme eines Kreislaufes mindestens eines Abluft-Wärmepumpensystems (An; A6) und
- aus in einem Fluid gespeicherter Erdwärme eines primären Wärmepumpenkreislaufes (PKL) mindestens eines Wärmepumpensystems (An; A2) gewonnen wird,
- wobei der Kollektorkreislauf der solarthermischen Anlage (An; A1) und/oder der Kreislauf des Abluft-Wärmepumpensystems (An; A6) mit dem primären Wärmepumpenkreislauf (PKL) des Wärmepumpensystems (An; A2) über jeweils einen Wärmetauscher (A22) mit einer Wärmeenergie aufnehmenden und abgebenden im Erdreich angeordneten Einrichtung (E) thermodynamisch verbunden ist/sind,
- wobei die gewonnene Wärmeenergie aus der solarthermischen Anlage (An; A1) und/oder dem Abluft-Wärmepumpensystem (An; A6) über den oder die Wärmetauscher (A22) im primären Wärmepumpenkreislauf (PKL) des Wärmepumpensystems (An; A2) entweder einem der an das Wärmepumpensystem (An; A2) sekundärseitig angeschlossenen Wärmeenergieverbrauchssysteme (B; B1, B2) zugeführt oder in der Erdspeicher gespeichert und im Bedarfsfall über den primären Wärmepumpenkreislauf (PKL) des Wärmepumpensystems (An; A2) wieder entnommen wird,
- wobei die Einrichtung (E) bezüglich einer Geländeoberkante (G1) des Erdreichs ein mit einer oberen und einer seitlich umlaufenden Dämmungs- und Abdichtungsstruktur (S) versehener nach unten offener Erdspeicher (E) ist,
- der als Teil des primären Wärmepumpenkreislaufes (PKL) des Wärmepumpensystems (A2) aus mehreren an einem Verteilerblock-Vorlaufseite (VT-VL) beginnenden und einem Verteilerblock-Rücklaufseite (VT-RL) endenden Rohrleitungen (Rn) ausgebildet wird, wobei in mehreren übereinander liegenden horizontalen Ebenen (En) mehrere Rohrleitungslagen (Ln) gebildet werden, die unterhalb der der Dämmungs- und Abdichtungsstruktur (S) angeordneten Verfülllage (Vn) aus Erdreich liegen, und
- die mehreren Rohrleitungen (Rn) über die mehreren Ebenen (En) geführt werden, und aus den mehreren Rohrleitungen (Rn) gemeinsam in jeder der Ebenen (En) die Rohrleitungslage (Ln) gebildet wird,
**dadurch gekennzeichnet, dass**
- die mehreren innerhalb der Ebenen (En) nebeneinander liegenden Rohrleitungen (Rn), die Fließrichtung des im primären Wärmepumpenkreislauf (PKL) des Wärmepumpensystems (A2) angeordneten Fluids betreffend, mit einer zur Vereinheitlichung des Temperaturniveaus im Erdspeicher dreidimensionalen Verlegegeometrie im Gegenstromprinzip angeordnet werden, und
- die mehreren nebeneinander liegenden Rohrleitungen (Rn) innerhalb der Ebenen (En) derart angeordnet werden, dass ein Vorlauf (VL) einer Rohrleitung (R1) abwechselnd neben einem Rücklauf (RL) einer nächstliegenden anderen Rohrleitung (R8) usw. angeordnet ist.

6. Verfahren nach Anspruch 5,
**dadurch gekennzeichnet, dass**
der Kollektorkreislauf der solarthermischen Anlage (An; A1) und/oder der Kreislauf des Abluft-Wärmepumpensystems (An; A6) jeweils eine Umschaltarmatur (A13) umfasst, die das jeweilige Fluid über einen ersten Abzweig (A1-RL; Schaltweg III-I) in dem jeweiligen Kreislauf führt, oder die das jeweilige Fluid über einen zweiten Abzweig (A1-RL-Sole; Schaltweg III-II) dem jeweiligen Wärmetauscher (A22) im primären Wärmepumpenkreislauf (PKL) des Erdspeichers (E) des Wärmepumpensystems (A2) zuführt, wodurch eine Temperaturanhebung (Soleanhebung) des in dem primären Wärmepumpenkreislauf (PKL) des Wärmepumpensystems (An; A2) angeordneten Fluids vorgenommen wird.

7. Verfahren nach Anspruch 6,
**dadurch gekennzeichnet, dass**
sich die Temperatur des Fluids innerhalb des Kollektorkreislaufes der mindestens einen solarthermischen Anlage (An; A1) und/oder des Kreislaufes des mindestens einen Abluft-Wärmepumpensystems (An; A6) in bestimmten Zeitabständen oszillierend ändert, weshalb die Temperaturanhebung (Soleanhebung) des in dem primären Wärmepumpenkreislauf (PKL) des Wärmepumpensystems (A2) angeordneten Fluids ebenfalls oszillativ vorgenommen wird.

8. Verfahren nach Anspruch 5,
**dadurch gekennzeichnet, dass**
die Wärmeenergieflüsse aller vorhandenen Wärmeenergieverbrauchssysteme (B; B1, B2, B3) und aller vorhandenen Wärmeenergie-Einspeisesysteme (An) der Wärmeenergieversorgungsanlage (W) mittels eines einzigen Steuer- und Regelgerätes gesteuert und regelt werden.

## Claims

1. A thermal energy supply installation (W) which provides thermal energy for at least one thermal energy consumption system (B; B1, B2, B3) consisting of at least one thermal energy feed-in system (An), comprising
- at least one solar thermal installation (An; A1) for obtaining solar heat stored in a fluid of a collector circuit and/or
- at least one exhaust air thermal pump system (An; A6) for obtaining heat stored in a gaseous fluid of the circuit, and
- at least one thermal pump system (An; A2) for obtaining geothermal energy stored in a fluid of a primary thermal pump circuit (PKL) of a thermal pump system (An; A2),
- wherein the collector circuit of the solar thermal installation (An; A1) and/or the circuit of the exhaust air thermal pump system (An; A6) with the primary thermal pump circuit (PKL) of the thermal pump system (An; A2) is/are thermodynamically connected via one heat exchanger (A22) respectively to a facility (E) which is arranged in the ground and which receives and emits thermal energy, and
- the thermal energy obtained from the solar thermal installation (An; A1) and/or from the exhaust air thermal pump system (An; A6) is fed via the heat exchanger/s (A22) in the primary thermal pump circuit (PKL) of the thermal pump system (An; A22) either to one of the thermal energy consumption systems (B; B1, B2) connected on the secondary side to the thermal pump system (An; A2) or is stored in the ground storage device and is again removed when required via the primary thermal pump circuit (PKL) of the thermal pump system (An; A2),
- wherein the facility (E) is a ground storage device which is open below and which is equipped with an insulation and sealing structure (S) which runs around above and at the sides,
- which is formed as part of the primary thermal pump circuit (PKL) of the thermal pump system (A2) from several pipe lines (Rn) on a distribution block flow side (VT-VL) and which end on a distribution block return side (VT-RL), which in several superimposed horizontal levels (En) form several pipeline layers (Ln), which lie below the filling level (Vn) of earth arranged within the insulation and sealing structure (S), and
- the several pipe lines (Rn) are guided over the several levels (En), and the several pipe lines (Rn) together form the pipe line layer (Ln) in each of the levels (En),
**characterized in that**
- the several pipe lines (Rn) which lie adjacent to each other within the levels (En), relating to the direction of flow of the fluid arranged in the primary thermal pump circuit (PKL) of the thermal pump system (A2), are arranged in a three-dimensional displacement geometry in the counter-flow principle in order to unify the temperature level in the ground storage device, and
- the several pipe lines (Rn) lying adjacent to each other within the levels (En) are arranged in such a manner that a flow side (VL) of a pipe lines (R1) is alternately arranged next to a return side (RL) of an adjacent other pipe line (R8), and so on.

2. The thermal energy supply installation (W) according to claim 1,
**characterized in that**
the respective heat exchanger (A22), seen in the direction of flow of the respective fluid in the primary thermal pump circuit (PKL) of the thermal pump system (A2), is arranged in the return flow (A2-PKL-RL) of the primary thermal pump circuit (PKL) in front of the ground storage device (E) or in the flow (A2-PKL-VL) of the primary thermal pump circuit (PKL) behind the ground storage device (E).

3. The thermal energy supply installation (W) according to claim 1,
**characterized in that**
the collector circuit of the solar thermal installation (An; A1) and/or the circuit of the exhaust air thermal pump system (An; A6) respectively comprises a changeover fitting (A13), which guides the respective fluid via a first branch (A1-RL; contact path III-I) in the respective circuit, or which uses the respective fluid in the collector circuit and/or in the circuit of the exhaust air thermal pump system (An; A6) in order to increase the temperature of the fluid arranged in the primary thermal pump circuit (PKL) of the thermal pump system (A2) (brine increase), and via a second branch (A1-RL-brine; contact path III-II) guides it to the respective heat exchanger (A22) in the primary thermal pump circuit (PKL) of the ground storage device (E).

4. The thermal energy supply installation (W) according to claim 1,
**characterized in that**
the thermal energy supply installation (W) comprises a single control and regulation device, which is connected to all existing thermal energy consumption systems (B; B1, B2).

5. A method for providing thermal energy for at least one energy consumption system (B;
B1, B2, B3) of a thermal energy supply installation (W), which comprises at least one thermal energy feed-in system (An), wherein the thermal energy is obtained
- from solar heat of a collector circuit of at least one solar thermal installation (An; A1) stored in a fluid and/or
- from heat, stored in a gaseous fluid, of a circuit of at least one exhaust air thermal pump system (An; A6) and
- from geothermal energy, stored in a fluid, of a primary thermal pump circuit (PKL) of at least one thermal pump system (An; A2),
- wherein the collector circuit of the solar thermal installation (An; A1) and/or the circuit of the exhaust air thermal pump system (An; A6) with the primary thermal pump circuit (PKL) of the thermal pump system (An; A2) is/are thermodynamically connected via one heat exchanger (A22) respectively to a facility (E) which is arranged in the ground and which receives and emits thermal energy,
- wherein the thermal energy obtained from the solar thermal installation (An; A1) and/or from the exhaust air thermal pump system (An; A6) is fed via the heat exchanger/s (A22) in the primary thermal pump circuit (PKL) of the thermal pump system (An; A22) either to one of the thermal energy consumption systems (B; B1, B2) connected on the secondary side to the thermal pump system (An; A2) or is stored in the ground storage device and is again removed when required via the primary thermal pump circuit (PKL) of the thermal pump system (An; A2),
- wherein with regard to a ground upper edge (G1) of the earth, the facility (E) is a ground storage device (E) equipped with an insulation and sealing structure (S) which runs around above and at the side, and is open below,
- which is formed as part of the primary thermal pump circuit (PKL) of the thermal pump system (A2) from several pipe lines (Rn) on a distribution block flow side (VT-VL) and which end on a distribution block return side (VT-RL), which in several superimposed horizontal levels (En) form several pipeline layers (Ln), which lie below the filling level (Vn) of earth arranged within the insulation and sealing structure (S), and
- the several pipe lines (Rn) are guided over the several levels (En), and from the several pipe lines (Rn) the pipe line layer (Ln) is formed in each of the levels (En),
- **characterized in that**
- the several pipe lines (Rn) which lie adjacent to each other within the levels (En), relating to the direction of flow of the fluid arranged in the primary thermal pump circuit (PKL) of the thermal pump system (A2), are arranged in a three-dimensional displacement geometry in the counter-flow principle in order to unify the temperature level in the ground storage device, and
- the several pipe lines (Rn) lying adjacent to each other within the levels (En) are arranged in such a manner that a flow side (VL) of a pipe lines (R1) is alternately arranged next to a return side (RL) of an adjacent other pipe line (R8), and so on.

6. The method according to claim 5,
**characterized in that**
the collector circuit of the solar thermal installation (An; A1) and/or the circuit of the exhaust air thermal pump system (An; A6) respectively comprises a changeover fitting (A13) which guides the respective fluid via a first branch (A1-RL; contact path III-I) in the respective circuit, or which guides the respective fluid via a second branch (A1-RL-brine; contact path III-II) to the respective heat exchanger (A22) in the primary thermal pump circuit (PKL) of the ground storage device (E), as a result of which a temperature increase (brine increase) of the fluid arranged in the primary thermal pump circuit (PKL) of the thermal pump system (An; A2) is conducted.

7. The method according to claim 6,
**characterized in that**
the temperature of the fluid within the collector circuit of the at least one solar thermal installation (An; A1) and/or of the circuit of the at least one exhaust air thermal pump system (An; A6) changes in an oscillating manner at certain time intervals, as a result of which the temperature increase (brine increase) of the fluid arranged in the primary thermal pump circuit (PKL) of the thermal pump system (A2) is also conducted in an oscillating manner.

8. The method according to claim 5,
**characterized in that**
the thermal energy flows of all existing thermal energy consumption systems (B; B1, B2, B3) and all existing thermal energy feed-in systems (An) of the thermal energy supply installation (W) are controlled and regulated by means of a single control and regulation device.

## Revendications

1. Installation d'alimentation en énergie thermique (W), qui fournit de l'énergie thermique à au moins un système de consommation d'énergie thermique (B ; B1, B2, B3) à partir d'au moins un système d'injection d'énergie thermique (An), comprenant
- au moins une installation thermique solaire (An ; A1) destinée à capter l'énergie solaire stockée dans un fluide d'un circuit de collecteur et/ou
- au moins un système de pompe à chaleur à air d'échappement (An ; A6) destiné à capter la chaleur stockée dans un fluide gazeux du circuit, ainsi que
- au moins un système de pompe à chaleur (An ; A2) destiné à capter la chaleur terrestre stockée dans un fluide d'un circuit de pompe à chaleur primaire (PKL) d'un système de pompe à chaleur (An ; A2),
- le circuit de collecteur de l'installation thermique solaire (An ; A1) et/ou le circuit du système de pompe à chaleur à air d'échappement (An ; A6) avec le circuit de pompe à chaleur primaire (PKL) du système de pompe à chaleur (A2) étant, par le biais de respectivement un échangeur de chaleur (A22), en liaison thermodynamique avec un dispositif absorbant et délivrant l'énergie thermique disposé dans la terre, et
- l'énergie thermique captée à partir de l'installation thermique solaire (An ; A1) et/ou du système de pompe à chaleur à air d'échappement (An ; A6) étant, via le ou les échangeurs de chaleur (A22) dans le circuit de pompe à chaleur primaire (PKL) du système de pompe à chaleur (An ; A2), soit conduite à un des systèmes de consommation d'énergie thermique (B ; B1, B2) raccordés côté secondaire au système de pompe à chaleur (An ; A2), soit stockée dans l'accumulateur terrestre et prélevée de nouveau en cas de besoin via le circuit de pompe à chaleur primaire (PKL) du système de pompe à chaleur (An ; A2),
- le dispositif (E) étant, par rapport à un niveau du sol (G1) du terrain, un accumulateur terrestre ouvert vers le bas muni d'une structure d'isolation et d'étanchéité (S) supérieure et d'une structure d'isolation et d'étanchéité (S) latéralement périphérique,
- qui est constitué, en tant que partie du circuit de pompe à chaleur primaire (PKL) du système de pompe à chaleur (A2), de plusieurs conduites tubulaires (Rn), commençant au niveau d'un côté aller de bloc distributeur (VT-VL) et se terminant au niveau d'un côté retour de bloc distributeur (VT-RL), qui forment, dans plusieurs plans (En) horizontaux situés les uns au-dessus des autres, plusieurs couches de conduites tubulaires (Ln) qui sont placées au-dessous de la couche de remplissage (V) en terre disposée à l'intérieur de la structure d'isolation et d'étanchéité (S), et
- les plusieurs conduites tubulaires (Rn) sont guidées au-dessus des plusieurs plans (En), et les plusieurs conduites tubulaires (Rn) forment conjointement la couche de conduites tubulaires (Ln) dans chacun des plans (En),
**caractérisée en ce que**
- les plusieurs conduites tubulaires (Rn) juxtaposées à l'intérieur des plans (En), en ce qui concerne la direction d'écoulement du fluide disposé dans le circuit de pompe à chaleur primaire (PKL) du système de pompe à chaleur (A2), sont disposées dans une géométrie de pose tridimensionnelle selon le principe du contre-courant pour uniformiser le niveau de température dans l'accumulateur terrestre, et
- les plusieurs conduites tubulaires (Rn) juxtaposées sont disposées à l'intérieur des plans (En) de telle sorte qu'un côté aller (VL) d'une conduite tubulaire (R1) est disposé en alternance près d'un côté retour (RL) d'une autre conduite tubulaire (R8) la plus proche, et ainsi de suite.

2. Installation d'alimentation en énergie thermique (W) selon la revendication 1,
**caractérisée en ce que**
l'échangeur de chaleur (A22) respectif, vu dans la direction d'écoulement du fluide respectif dans le circuit de pompe à chaleur primaire (PKL) du système de pompe à chaleur (A2), est disposé dans le retour (A2-PKL-RL) du circuit de pompe à chaleur primaire (PKL) en amont de l'accumulateur terrestre (E) ou dans l'aller (A2-PKL-VL) du circuit de pompe à chaleur primaire (PKL) en aval de l'accumulateur terrestre (E).

3. Installation d'alimentation en énergie thermique (W) selon la revendication 1,
**caractérisée en ce que**
le circuit de collecteur de l'installation thermique solaire (An ; A1) et/ou le circuit du système de pompe à chaleur à air d'échappement (An ; A6) comprend respectivement une robinetterie de commutation (A13) qui conduit le fluide respectif par le biais d'une première dérivation (A1-RL ; voie de commutation III-I) dans le circuit respectif ou qui utilise le fluide respectif dans le circuit de collecteur et/ou dans le circuit du système de pompe à chaleur à air d'échappement (An ; A6) pour le relèvement de la température du fluide (relèvement de la saumure) disposé dans le circuit de pompe à chaleur primaire (PKL) du système de pompe à chaleur (A2), et l'achemine, via une deuxième dérivation (A1-RL-saumure ; voie de commutation III-II) à l'échangeur de chaleur (A22) respectif dans le circuit de pompe à chaleur primaire (PKL) de l'accumulateur terrestre (E).

4. Installation d'alimentation en énergie thermique (W) selon la revendication 1,
**caractérisée en ce que**
l'installation d'alimentation en énergie thermique (W) comprend un appareil de commande et de régulation unique qui est en liaison avec tous les systèmes de consommation d'énergie thermique (B ; B1, B2) présents et tous les systèmes d'injection d'énergie thermique (An) présents.

5. Procédé de fourniture d'énergie thermique pour au moins un système de consommation d'énergie thermique (B ; B1, B2, B3) d'une installation d'alimentation en énergie thermique (W) qui comprend au moins un système d'injection d'énergie thermique (An), l'énergie thermique étant acquise
- à partir de chaleur solaire, stockée dans un fluide, d'un circuit de collecteur d'au moins une installation thermique solaire (An ; A1) et/ou
- à partir de chaleur stockée dans un fluide gazeux d'un circuit d'au moins un système de pompe à chaleur à air d'échappement (An ; A6) et
- à partir de chaleur terrestre, stockée dans un fluide, d'un circuit de pompe à chaleur primaire (PKL) d'au moins un système de pompe à chaleur (An ; A2),
- le circuit de collecteur de l'installation thermique solaire (An ; A1) et/ou le circuit du système de pompe à chaleur à air d'échappement (An ; A6) avec le circuit de pompe à chaleur primaire (PKL) du système de pompe à chaleur (An ; A2) étant, par le biais de respectivement un échangeur de chaleur (A22), en liaison thermodynamique avec un dispositif (E) absorbant et délivrant l'énergie thermique disposé dans la terre,
- l'énergie thermique captée à partir de l'installation thermique solaire (An ; A1) et/ou du système de pompe à chaleur à air d'échappement (An ; A6) étant, via le ou les échangeurs de chaleur (A22) dans le circuit de pompe à chaleur primaire (PKL) du système de pompe à chaleur (An ; A2), soit conduite à un des systèmes de consommation d'énergie thermique (B ; B1, B2) raccordés côté secondaire au système de pompe à chaleur (An ; A2), soit stockée dans l'accumulateur terrestre et prélevée de nouveau en cas de besoin via le circuit de pompe à chaleur primaire (PKL) du système de pompe à chaleur (An ; A2),
- le dispositif (E) étant, par rapport à un niveau du sol (G1) du terrain, un accumulateur terrestre (E) ouvert vers le bas muni d'une structure d'isolation et d'étanchéité (S) supérieure et d'une structure d'isolation et d'étanchéité (S) latéralement périphérique,
- qui est constitué, en tant que partie du circuit de pompe à chaleur primaire (PKL) du système de pompe à chaleur (A2), de plusieurs conduites tubulaires (Rn), commençant au niveau d'un côté aller de bloc distributeur (VT-VL) et se terminant au niveau d'un côté retour de bloc distributeur (VT-RL), plusieurs couches de conduites tubulaires (Ln) étant formées dans plusieurs plans (En) horizontaux situés les uns au-dessus des autres, et étant situées au-dessous de la couche de remplissage (V) en terre disposée au-dessous de la structure d'isolation et d'étanchéité (S),
- les plusieurs conduites tubulaires (Rn) sont conduites au-dessus des plusieurs plans (En), et la couche de conduites tubulaires (Ln) est formée des plusieurs conduites tubulaires (Rn) conjointement dans chacun des plans (En),
**caractérisé en ce que**
- les plusieurs conduites tubulaires (Rn) juxtaposées à l'intérieur des plans (En), en ce qui concerne la direction d'écoulement du fluide disposé dans le circuit de pompe à chaleur primaire (PKL) du système de pompe à chaleur (A2), sont disposées dans une géométrie de pose tridimensionnelle selon le principe du contre-courant pour uniformiser le niveau de température dans l'accumulateur terrestre, et
- les plusieurs conduites tubulaires (Rn) juxtaposées sont disposées à l'intérieur des plans (En) de telle sorte qu'un aller (VL) d'une conduite tubulaire (R1) est disposé en alternance près d'un retour (RL) d'une autre conduite tubulaire (R8) la plus proche, et ainsi de suite.

6. Procédé selon la revendication 5,
**caractérisé en ce que**
le circuit de collecteur de l'installation thermique solaire (An ; A1) et/ou le circuit du système de pompe à chaleur à air d'échappement (An ; A6) comprend respectivement une robinetterie de commutation (A13) qui conduit le fluide respectif par le biais d'une première dérivation (A1-RL ; voie de commutation III-I) dans le circuit respectif ou qui conduit le fluide respectif par le biais d'une deuxième dérivation (A1-RL-saumure ; voie de commutation III-II) à l'échangeur de chaleur (A22) respectif dans le circuit de pompe à chaleur primaire (PKL) de l'accumulateur terrestre (E) du système de pompe à chaleur (A2), ce qui entraîne un relèvement de la température du fluide (relèvement de la saumure) du fluide disposé dans le circuit de pompe à chaleur primaire (PKL) du système de pompe à chaleur (A2).

7. Procédé selon la revendication 6,
**caractérisé en ce que**
la température du fluide à l'intérieur du circuit de collecteur de l'installation thermique solaire (An ; A1) au moins au nombre de un et/ou du circuit du système de pompe à chaleur à air d'échappement (An ; A6) au moins au nombre de un varie de façon oscillante à des intervalles de temps définis, c'est la raison pour laquelle le relèvement de la température du fluide (relèvement de la saumure) du fluide disposé dans le circuit de pompe à chaleur primaire (PKL) du système de pompe à chaleur (A2) est également entrepris de façon oscillante.

8. Procédé selon la revendication 5,
**caractérisé en ce que**
les flux d'énergie thermique de tous les systèmes de consommation d'énergie thermique (B ; B1, B2, B3) présents et de tous les systèmes d'injection d'énergie thermique (An) présents de l'installation d'alimentation en énergie thermique (W) sont commandés et régulés au moyen d'un appareil de commande et de régulation unique.
